# EUROPEAN PATENT APPLICATION

(11) **EP 4 769 094 A1**
(43) Date of publication of application: **01.07.2026**
(21) Application number: 24884071.2
(22) Date of filing: 30.07.2024
(51) Int. Cl.: G06F 3/04817

(54) **CONTENT PROCESSING METHOD, GRAPHICAL INTERFACE, AND ELECTRONIC DEVICE**

(30) Priority: 03.11.2023 CN 202311465279; 27.12.2023 CN 202311832908
(71) Applicant: Honor Device Co., Ltd., Shenzhen, Guangdong 518040 (CN)
(72) Inventor: ZHOU, Shuang, Shenzhen, Guangdong 518040 (CN); LIU, Huizhi, Shenzhen, Guangdong 518040 (CN); FENG, Haijun, Shenzhen, Guangdong 518040 (CN); LI, Chengguang, Shenzhen, Guangdong 518040 (CN)
(74) Representative: Gill Jennings & Every LLP
(86) International application number: PCT/CN2024/108465
(87) International publication number: WO 2025/092064

(57) **Abstract**

This application provides a content processing method, a graphical interface, and an electronic device. The electronic device displays an interface of an application. The interface includes content such as a text or an image. If an operation performed on the text is received, a first panel including the text is displayed. If an operation of dragging the first panel to an editing hotspot is further detected, a second panel including the text is displayed, so that a user selects a target text from the second panel, and shares the target text with a target object when receiving an operation of dragging the target text to a target area for release. In addition, if it is detected that the first panel is directly dragged to the target area for release, or it is detected that a blank is pressed in an editing panel and then a third panel including the text is dragged to the target area for release, the text is shared with the target object. In this way, a convenient experience of freely selecting content of interest and sharing the content may be provided for the user.

## Description

This application claims priority to Chinese Patent Application No. 202311465279.6, filed with the China National Intellectual Property Administration on November 03, 2023 and entitled "CONTENT SELECTION METHOD, GRAPHICAL INTERFACE, AND ELECTRONIC DEVICE", and Chinese Patent Application No. 202311832908.4, filed with the China National Intellectual Property Administration on December 27, 2023 and entitled "CONTENT PROCESSING METHOD, GRAPHICAL INTERFACE, AND ELECTRONIC DEVICE", which are incorporated herein by reference in their entireties.

### TECHNICAL FIELD

This application relates to the field of terminals, and in particular, to a content processing method, a graphical interface, and an electronic device.

### BACKGROUND

Currently, various applications provide increasingly more abundant content. Users want to conveniently select content they are interested in and perform further processing on the content. How to meet user requirements is an urgent problem to be resolved.

### SUMMARY

This application provides a content processing method, a graphical interface, and an electronic device. The electronic device displays an interface of an application. The interface includes content such as a text or an image. If an operation performed on the text is received, a first panel including the text is displayed. If an operation of dragging the first panel to an editing hotspot is further detected, a second panel including the text is displayed, so that a user selects a target text from the second panel, and shares the target text with a target object when receiving an operation of dragging the target text to a target area for release. In this way, a convenient experience of freely selecting content of interest and sharing the content may be provided for the user.

According to a first aspect, this application provides a content processing method. The content processing method is applied to an electronic device. The method includes: displaying an interface of a first application, where the interface includes a first text; displaying a first panel in response to a first operation performed on the first text, where the first panel includes the first text; displaying a second panel in response to a second operation performed on the first panel, where the second panel includes the first text and a cursor; and selecting a target text in response to an operation performed on the cursor, where the target text is part or all of the first text.

After the method provided in the first aspect is implemented, the user may be provided with a function of freely selecting content of interest from an application, thereby supporting the user to perform next-step processing on the content of interest, to satisfy user requirements. With reference to the method described in the first aspect, the first operation is a touch and hold operation.

In this way, the user can trigger the electronic device to provide a content selection function only through a simple and convenient touch and hold operation, thereby improving interactive experience of the user with a device.

With reference to the method described in the first aspect, the second operation is an operation of dragging to a first area of the interface. The first area includes a first icon, and the first icon is used to prompt the user to perform text editing. The first area may be located below a screen of the electronic device.

In this way, an icon is displayed in a specific area, so that the user may be prompted to drag a panel to the specific area to perform content selection. The specific area is arranged below the screen of the electronic device, so that the user can drag the panel to the specific area, thereby improving interactive experience of the user.

With reference to the method described in the first aspect, the displaying a first panel includes: displaying the first panel on an upper layer of the interface; and after the displaying a first panel and before the displaying a second panel, the method further includes: displaying the interface on a lower layer of the first panel.

In this way, a panel displayed by an electronic device is equivalently suspended above an original interface, which not only retains content of the original interface to some extent, but also brings the user a visual effect of being able to drag the panel, thereby improving the interactive experience of the user with the device.

With reference to the method described in the first aspect, after the displaying a second panel, the method further includes: stopping displaying the first panel.

In this way, the display of unnecessary elements may be reduced, thereby avoiding interference with an element to which the user pays attention, and improving an interface display effect.

With reference to the method described in the first aspect, after the selecting a target text, the method further includes: displaying a menu bar in response to a third operation performed on the target text, where the menu bar includes an icon of a second application; and sharing the target text to the second application in response to a fourth operation performed on the target text. The third operation is an operation of dragging to a second area of the interface. The fourth operation is an operation of still dragging the target text to an icon of the second application and releasing the target text.

In this way, a more convenient and abundant content sharing method may be provided for the user. Specifically, the user may share the selected content to the target object only by dragging the selected content to the target area and then releasing the selected content.

With reference to the method described in the first aspect, after the third operation, the method further includes: stopping displaying the second panel.

In this way, during the content sharing, a panel for selecting content is no longer displayed. This reduces display of unnecessary elements, and avoids interference with an element to which the user pays attention, thereby improving an interface display effect.

With reference to the method described in the first aspect, after the third operation and before sharing the target text to the second application, the method further includes: switching the target text from a first display form to a second display form.

In this way, through switching of the display form of the target text, an area to which the target text is dragged can be better fitted during dragging, thereby improving the interactive experience.

With reference to the method described in the first aspect, before the displaying a menu bar, the method further includes: displaying a light band in a third area.

In this way, the user may be guided, through the light band, to drag the panel to a corresponding area to trigger opening of the menu bar, thereby improving the interactive experience of the user with the device.

With reference to the method described in the first aspect, after the selecting a target text, the method further includes: displaying a third panel in response to a fifth operation performed on the second panel, where the third panel includes the first text; displaying a menu bar in response to a third operation performed on the third panel, where the menu bar includes an icon of a second application; and sharing all texts in the second panel to the second application in response to a fourth operation performed on the second panel. The fifth operation is an operation of touching and holding a blank area. The third operation is an operation of dragging to a second area of the interface. The fourth operation is an operation of still dragging the target text to an icon of the second application and releasing the target text.

In this way, in a stage in which a user freely selects content, a convenient operation entry may be provided for the user to share all content included in a panel. To be specific, the user may directly and quickly select entire content to share only through a simple touch and hold operation on a blank in a panel without the need to select all of the content through a cursor.

With reference to the method described in the first aspect, after the third operation, the method further includes: stopping displaying the third panel.

In this way, during the content sharing, a panel for selecting content is no longer displayed. This reduces display of unnecessary elements, and avoids interference with an element to which the user pays attention, thereby improving an interface display effect.

With reference to the method described in the first aspect, after the third operation and before all texts in the third panel is shared to the second application, the method further includes: switching the third panel from a third display form to a fourth display form.

In this way, through switching of the display forms of all texts, areas to which the texts are dragged can be better fitted during dragging, thereby improving the interactive experience.

With reference to the method described in the first aspect, before the displaying a menu bar, the method further includes: displaying a light band in a fourth area.

In this way, the user may be guided, through the light band, to drag the panel to a corresponding area to trigger opening of the menu bar, thereby improving the interactive experience of the user with the device.

With reference to the method described in the first aspect, the first text is displayed in a non-editable control provided by the first application. The first panel and the second panel are provided by one of an application, a service, or a component other than the first application.

In this way, for some situations where some applications do not support user selection of content, or provide different content selection manners for different applications, a unified content processing method may be provided for the user through the content selection method provided in this application, to satisfy user requirements and enhance user experience.

With reference to the method described in the first aspect, after the first operation, and before the displaying a first panel, the method further includes: taking a screenshot to obtain the first text.

According to a second aspect, this application provides a content processing method. The content processing method is applied to an electronic device. The method includes: displaying an interface of a first application, where the first interface includes a first text; displaying a first panel in response to a first operation performed on the first text, where the first panel includes the first text; displaying a menu bar in response to a third operation performed on the first panel, where the menu bar includes an icon of a second application; and sharing the first text to the second application in response to a fourth operation performed on the first panel.

After the method provided in the second aspect is implemented, a convenient operation entry may be provided for a user to share all content included in a panel before free selection of content. To be specific, the user may directly and quickly select the entire content to share only through a simple operation of dragging a panel to a to-be-shared area without the need to trigger selection of the content.

According to a third aspect, this application provides a content processing method. The content processing method is applied to an electronic device. The method includes: displaying an interface of a first application, where the interface includes a first text; displaying a first panel in response to a first operation performed on the first text, where the first panel includes the first text; displaying a cursor on the first panel in response to an eleventh operation performed on the first panel; and selecting a target text in response to an operation performed on the cursor, where the target text is part or all of the first text.

After the method provided in the third aspect is implemented, the user may be provided with a function of freely selecting content of interest from an application, thereby supporting the user to perform next-step processing on the content of interest, to satisfy user requirements.

According to a fourth aspect, this application provides a content processing method. The content processing method is applied to an electronic device. The method includes: displaying an interface of a first application, where the first interface includes a first text; displaying a first panel in response to a first operation performed on the first text, where the first panel includes the first text and a cursor, and the first text is in a select all state; and selecting a target text in response to an operation performed on the cursor, where the target text is part or all of the first text.

After the method provided in the fourth aspect is implemented, the user may be provided with a function of freely selecting content of interest from an application, thereby supporting the user to perform next-step processing on the content of interest, to satisfy user requirements.

According to a fifth aspect, this application provides a content processing method. The content processing method is applied to an electronic device. The method includes: displaying an interface of a first application, where the interface includes a first text; displaying a first panel in response to a first operation performed on the first text, where the first panel includes the first text and a cursor, and part of the first text is in a selected state; and selecting a target text in response to an operation performed on the cursor, where the target text is part or all of the first text.

After the method provided in the fifth aspect is implemented, the user may be provided with a function of freely selecting content of interest from an application, thereby supporting the user to perform next-step processing on the content of interest, to satisfy user requirements.

According to a sixth aspect, this embodiment provides an electronic device. The electronic device includes one or more processors and one or more memories, where the one or more memories are coupled to the one or more processors, the one or more memories are configured to store computer program code, the computer program code includes a computer instruction, and when the one or more processors execute the computer instruction, the method according to any one of the first aspect or the second aspect is performed.

According to a seventh aspect, this application provides a computer-readable storage medium, including an instruction. When the instruction is run on an electronic device, the method according to any one of the first aspect or the second aspect is performed.

### BRIEF DESCRIPTION OF DRAWINGS

FIG. 1A to FIG. 1C are schematic diagrams of display interfaces of several text processing controls provided by an application;
FIG. 2A to FIG. 2B are schematic diagrams of display interfaces of several image processing controls provided by an application;
FIG. 3A is a schematic diagram of a set of operation interfaces for freely selected texts according to an embodiment of this application;
FIG. 3B(1), FIG. 3B(2), FIG. 3B(3), and FIG. 3B(4) are schematic diagrams of sets of operation interfaces for transmission of freely selected texts according to an embodiment of this application;
FIG. 3C is a schematic diagram of a set of operation interfaces for select-all texts according to an embodiment of this application;
FIG. 3D is a schematic diagram of a set of operation interfaces for transmission of select-all texts according to an embodiment of this application;
FIG. 4A is a schematic diagram of another set of operation interfaces for freely selected texts according to an embodiment of this application;
FIG. 4B(1), FIG. 4B(2), FIG. 4B(3), and FIG. 4B(4) are schematic diagrams of other sets of operation interfaces for transmission of freely selected texts according to an embodiment of this application;
FIG. 4C is a schematic diagram of another set of operation interfaces for select-all texts according to an embodiment of this application;
FIG. 4D is a schematic diagram of another set of operation interfaces for transmission of select-all texts according to an embodiment of this application;
FIG. 4E is a schematic diagram of another set of operation interfaces for select-all texts according to an embodiment of this application;
FIG. 4F is a schematic diagram of another set of operation interfaces for transmission of select-all texts according to an embodiment of this application;
FIG. 5A is a schematic diagram of another set of operation interfaces for freely selected texts according to an embodiment of this application;
FIG. 5B(1), FIG. 5B(2), FIG. 5B(3), and FIG. 5B(4) are schematic diagrams of other sets of operation interfaces for transmission of freely selected texts according to an embodiment of this application;
FIG. 5C is a schematic diagram of another set of operation interfaces for select-all texts according to an embodiment of this application;
FIG. 5D is a schematic diagram of another set of operation interfaces for transmission of select-all texts according to an embodiment of this application;
FIG. 6A is a schematic diagram of another set of operation interfaces for freely selected texts according to an embodiment of this application;
FIG. 6B(1), FIG. 6B(2), FIG. 6B(3), and FIG. 6B(4) are schematic diagrams of other sets of operation interfaces for transmission of freely selected texts according to an embodiment of this application;
FIG. 6C is a schematic diagram of another set of operation interfaces for select-all texts according to an embodiment of this application;
FIG. 6D is a schematic diagram of another set of operation interfaces for transmission of select-all texts according to an embodiment of this application;
FIG. 7A is a schematic diagram of a set of operation interfaces for free editing of an image according to an embodiment of this application;
FIG. 7B is a schematic diagram of a set of operation interfaces for transmission of a freely edited image according to an embodiment of this application;
FIG. 7C is a schematic diagram of a set of operation interfaces for selected images according to an embodiment of this application;
FIG. 7D is a schematic diagram of a set of operation interfaces for direct transmission of a selected image according to an embodiment of this application;
FIG. 8 is a schematic diagram of a hardware architecture of an electronic device according to an embodiment of this application; and
FIG. 9 is a schematic diagram of software of an electronic device according to an embodiment of this application.

### DESCRIPTION OF EMBODIMENTS

The technical solutions in embodiments of this application are described clearly and in detail below with reference to the accompanying drawings. In the descriptions of embodiments of this application, unless otherwise specified, "/" means or. For example, A/B may represent A or B. In this specification, "and/or" only means an association relationship for describing associated objects, and represents that three relationships may exist. For example, A and/or B may represent the following three cases: only A exists, both A and B exist, and only B exists.

The terms "first" and "second" mentioned below are merely intended for a purpose of description, and shall not be understood as an indication or implication of relative importance or implicit indication of the quantity of indicated technical features. Therefore, a feature defined by "first" or "second" may explicitly or implicitly include one or more features. In the description of embodiments of this application, unless otherwise stated, "a plurality of" refers to two or more.

The term "embodiment" mentioned in this application means that particular features, structures, or characteristics described with reference to the embodiment may be included in at least one embodiment of this application. The phrase appearing at various locations in this specification unnecessarily indicates a same embodiment or an independent or alternative embodiment exclusive to another embodiment. A person skilled in the art explicitly or implicitly understands that embodiments in this application may be combined with other embodiments.

The term "user interface (user interface, UI)" in the following embodiments of this application is a medium interface for interaction and information exchange between an application or an operating system and a user, and implements conversion between an internal form of information and a form that can be accepted by the user. The user interface is source code written in a specific computer language such as Java or an extensible markup language (extensible markup language, XML). Interface code is parsed and rendered on an electronic device, and is finally presented as content that can be identified by the user. A common presentation form of the user interface is a graphic user interface (graphic user interface, GUI), which refers to a user interface displayed in a graphical manner and related to a computer operation. The user interface may include visual interface elements such as a control, a text, an icon, a button, a menu, a tab, a text box, a dialog box, a state bar, a navigation bar, and a widget displayed on a display screen of the electronic device.

**Currently, applications (which may also be referred to as application software or APPs) are equipped with controls, and content such as text or an image is displayed through these controls.**

**The controls may be divided into two types: a type of control that supports selection of content to be displayed by the control, and a type of control that does not support selection of content to be displayed by the control.** Specific control types such as WebView, TextView, EditText, and ImageView are used as examples. Controls of types such as WebView and EditText usually support a user in selection of content displayed by the controls, to perform operations such as copying and searching. However, controls of types such as TextView and ImageView usually do not support the user in selection of content displayed through the controls, and therefore other operations cannot be further performed.

Optionally, no strong binding relationship exists between the control type and a fact regarding whether the control supports selection. During application development, a developer may also customize some attributes of various controls in an application, to set the control type that supports editing or not. For example, when an attribute textIsSelectable in TextView is defined as true, selection of content displayed in a TextView control may be enabled, to implement a function such as copying. For another example, when an editable attribute in EditText is defined as "false", selection of content displayed in an EditText control may be disabled. Similarly, a corresponding attribute in the ImageView may also be defined to set editability of content displayed in the Image View.

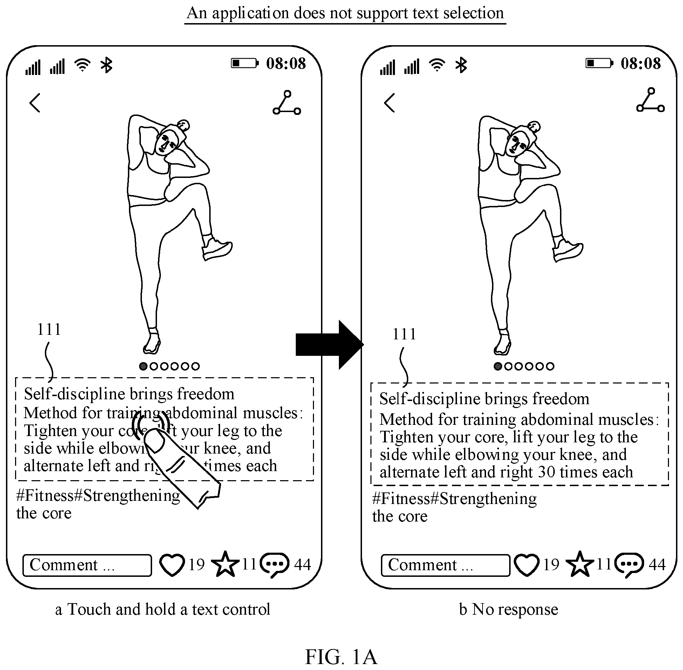

**Referring to** **FIG. 1A to FIG. 1C, FIG. 1A to FIG. 1C** **show schematic diagrams of display interfaces of several text processing controls through examples.**

FIG. 1A shows a schematic diagram of a display interface of a **text control that does not support selection.**

As shown in FIG. 1A, a control 111 included in an application is a text control that does not support selection. Specifically, although text content is displayed in the control 111, the application does not make any response after a user performs an operation such as touching and holding to the control 111. To be specific, selection of the content in the control 111 is not triggered.

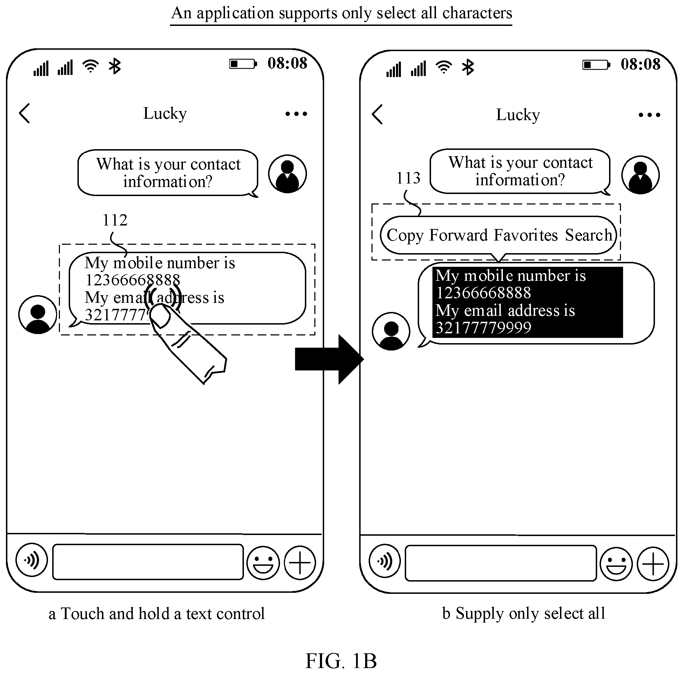

FIG. 1B shows a schematic diagram of a display interface of a **text control that only supports select all.**

As shown in FIG. 1B, a control 112 included in an application is a text control that only supports select all. Specifically, text content is displayed in the control 112, but after a user performs an operation such as touching and holding on the control 112, all content in the control 112 is selected by default in the application, and a toolbar 113 for processing the content in the control 112 pops up. The toolbar 113 may include a plurality of tool options such as copy, forward, favorite, and search.

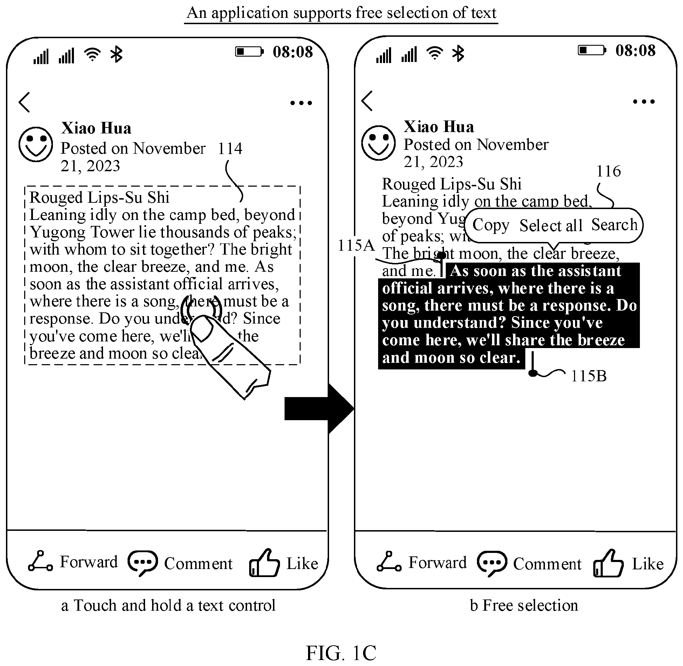

FIG. 1C shows a schematic diagram of a display interface of a **text control that supports free selection.**

As shown in FIG. 1C, a control 114 included in an application is a text control that supports free selection. Specifically, text content is displayed in the control 114. After a user performs an operation such as touching and holding on the control 114, the application displays a cursor 115A and a cursor 115B for sliding and selecting text content, and a toolbar 116 for processing selected content pops up. The toolbar 116 may include a plurality of tool options such as copy, select all, and search.

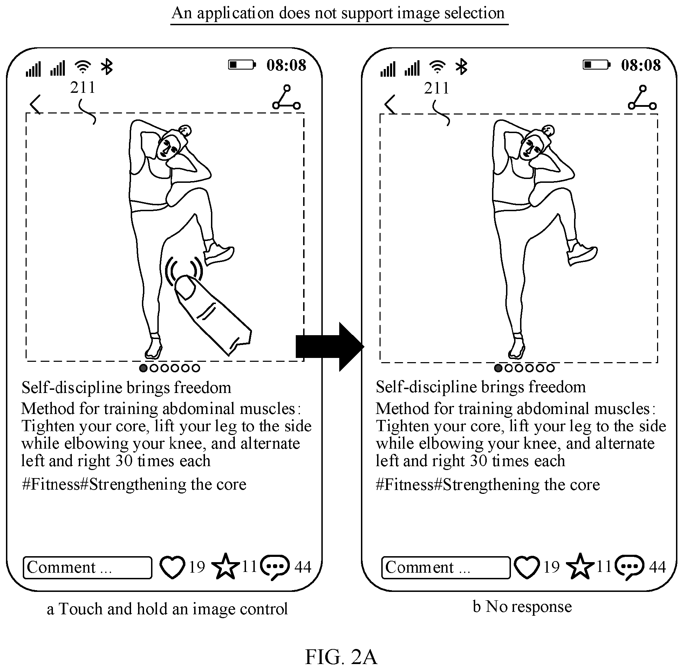

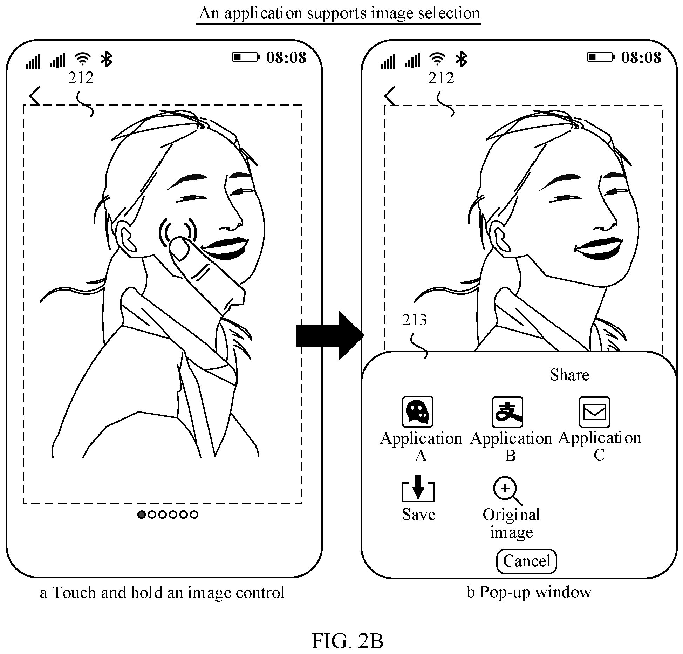

**Referring to** **FIG. 2A** **and** **FIG. 2B****,** **FIG. 2A** **and** **FIG. 2B** **show schematic diagrams of display interfaces of several image processing controls through examples.**

FIG. 2A shows a schematic diagram of a display interface of an **image control that does not support selection.**

As shown in FIG. 2A, a control 211 included in an application is an image control that does not support selection. Specifically, although image content is displayed in the control 211, the application does not make response after a user performs an operation such as touching and holding to the control 211. To be specific, selection of an image in the control 211 is not triggered.

FIG. 2B shows a schematic diagram of a display interface of an **image control that supports selection.**

As shown in FIG. 2B, a control 212 included in an application is an image control that supports selection. Specifically, image content is displayed in the control 212, but after a user performs an operation such as touching and holding on the control 212, an image in the control 212 is selected by default in the application, and a window 213 for processing the content in the control 212 pops up. The window 213 may include a plurality of processing options, for example, share to different applications, save, and view an original image.

It is found through analysis of the layout of controls in different applications that controls provided by most applications do not support selection of the content therein by the user, and then do not support further processing performed on the content. Although controls provided by a few applications support selection of the content therein by the user for further processing, processing manners provided by different applications are different. However, the user usually needs to select content of interest, and perform unified processing on content selected from different applications.

To resolve the foregoing problem, this application provides a content processing method, a graphical interface, and an electronic device, which allows a user to freely select content provided by an application, and may provide unified and abundant processing manners for content in different applications. The method includes: displaying an interface of an application, where the interface includes content such as a text or an image. If an operation performed on the text is received, a first panel including the text is displayed. If an operation of dragging the first panel to an editing hotspot is further detected, a second panel including the text is displayed, so that a user selects a target text from the second panel, and shares the target text with a target object when receiving an operation of dragging the target text to a target area for release. In addition, if it is detected that the first panel is dragged to the target area for release, or it is detected that a blank is pressed in an editing panel and then a third panel including the text is dragged to the target area for release, the text is shared with the target object. In addition, if an operation performed on the image is received, a fourth panel including the image is displayed, and if it is further detected that the fourth panel is dragged to a target area and released, the image is shared to a target object.

Optionally, this application further provides another content processing method, a graphical interface, and an electronic device. The method includes: displaying an interface of an application, where the interface includes content such as a text or an image. If an operation performed on the text is received, a first panel including the text is displayed. All texts in the first panel are not selected by default. If an operation of selecting a target text from the first panel is further received (different from an implementation plan), and when an operation of dragging the target text to a target area for releasing is further received, the target text is shared to the target object. In addition, if it is detected that the first panel is dragged to the target area for release, or it is detected that a blank is pressed in a first panel and then a third panel including the text is dragged to the target area for release, the text is shared with the target object. In addition, if an operation performed on the image is received, a fourth panel including the image is displayed, and if it is further detected that the fourth panel is dragged to a target area and released, the image is shared to a target object.

Optionally, this application further provides another content processing method, a graphical interface, and an electronic device. The method includes: displaying an interface of an application, where the interface includes content such as a text or an image. If an operation performed on the text is received, a first panel including the text is displayed. All texts in the first panel are selected by default. If an operation of selecting a target text from the first panel is further received (different from an implementation plan), and when an operation of dragging the target text to a target area for releasing is further received, the target text is shared to the target object. In addition, if it is detected that the first panel is dragged to the target area for release, or it is detected that a blank is pressed in a first panel and then a third panel including the text is dragged to the target area for release, the text is shared with the target object. In addition, if an operation performed on the image is received, a fourth panel including the image is displayed, and if it is further detected that the fourth panel is dragged to a target area and released, the image is shared to a target object.

Optionally, this application further provides another content processing method, a graphical interface, and an electronic device. The method includes: displaying an interface of an application, where the interface includes content such as a text or an image. If an operation performed on the text is received, a first panel including the text is displayed. All texts in the first panel are partially selected by default. If an operation of selecting a target text from the first panel is further received (different from an implementation plan), and when an operation of dragging the target text to a target area for releasing is further received, the target text is shared to the target object. In addition, if it is detected that the first panel is dragged to the target area for release, or it is detected that a blank is pressed in a first panel and then a third panel including the text is dragged to the target area for release, the text is shared with the target object. In addition, if an operation performed on the image is received, a fourth panel including the image is displayed, and if it is further detected that the fourth panel is dragged to a target area and released, the image is shared to a target object.

Through implementation of the method provided in this application, the following effects may be achieved.
(1) A more convenient and free content selection method is provided for a user. Specifically, the user may directly and quickly select entire content only through a touch and hold operation as required, or may select content of interest from the entire content through a touch and hold operation as required.
(2) A more convenient and abundant content sharing method is provided for the user. Specifically, the user may share the selected content to the target object only by dragging the selected content to the target area.
(3) A unified and abundant content processing method is provided for content of different applications. Specifically, the user may share content of different applications to a target object, and the target object may be an application, a device, a split screen, or the like mentioned below.

### Editing hotspot

The editing hotspot involved in this application refers to an area on an interface that may be used for interaction and triggers an electronic device to perform a corresponding event after the interaction. An interaction manner corresponding to the editing hotspot includes, for example, an operation of dragging a draggable element to the editing hotspot and then releasing the element. The event triggered by the interaction manner includes, for example, triggering the electronic device to display an editing panel. The editing panel may support a user in editing of text therein. The editing hotspot as mentioned in this application is merely an example name. A specific name of the area is not limited in this application. Specific functions provided by the area have been all recorded in embodiments of this application in detail.

### Content selection

Target text or the like in a display panel, a dragging panel, and a selection panel involved in the context of this application may be specifically provided by a "content selection" function. The "content selection" function may be provided by any one of a system-level/third-party application, a service, or a component. A name of the "content selection" function is merely an example. The name thereof is not limited in embodiments of this application. Specific functions provided by the "content selection" function have been all recorded in this application in detail.

### Content sharing

Content sharing involved in the context of this application may be specifically provided by a "smart flow service", a "cross-device transmission service", a "split-screen transmission service", or the like.

The "smart flow service" may further be referred to as a "cross-application transmission service", and may specifically provide a function of sharing content in this application to another application in a magic portal.

The "cross-device transmission service" may further be referred to as a "multi-device collaboration service", and may specifically provide a function of sharing content in a current device to another device for collaborative processing.

The "split-screen transmission service" may further be referred to as a "multi-screen collaboration service", and may specifically provide a function of sharing content in a current sub-screen to another sub-screen for collaborative processing.

In embodiments of this application, when "content sharing" is applied to different scenarios, the "content sharing" may be specifically provided by the foregoing different functional modules. This is not limited in embodiments of this application. The names of the foregoing various functions are merely examples. The names thereof are not limited in embodiments of this application. Specific functions provided by the services have been all recorded in this application in detail.

In embodiments of this application, the "content selection" and the "content sharing" may be provided by two independent functional modules, or may be provided by one functional module formed by coupling two sub-functional modules. This is not limited in embodiments of this application.

In embodiments of this application, to protect the intellectual property of the user and provide immersive game experience for the user, applications that may perform the foregoing "content selection" and "content sharing" include a system application or a three-party application in addition to the following applications: a document provision application and a game application. An application that cannot implement the foregoing "content selection" and "content sharing" is not specifically limited in embodiments of this application, and may be adjusted according to an actual requirement.

Next, the content processing method provided in this application is described in detail through text content and image content as examples and in combination with several sets of user interfaces provided in the accompanying drawings.

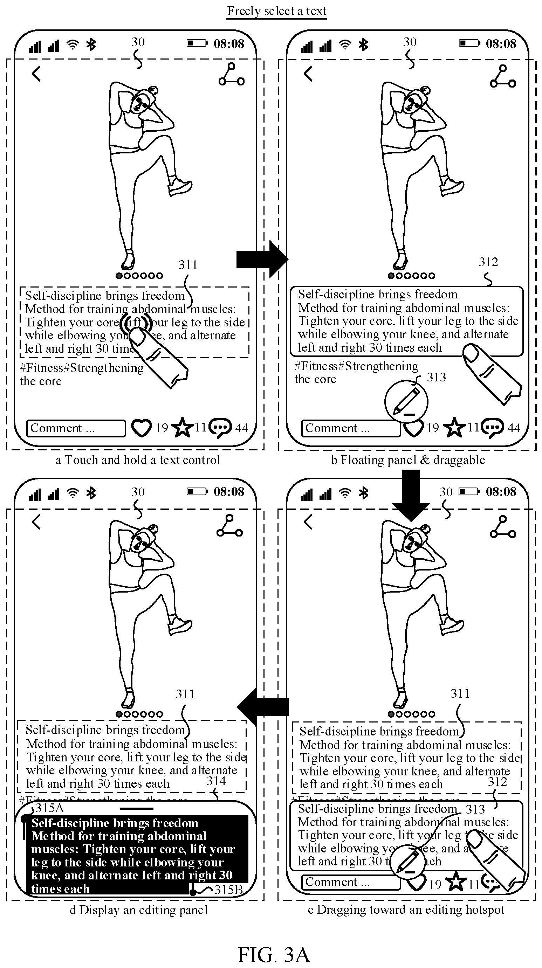

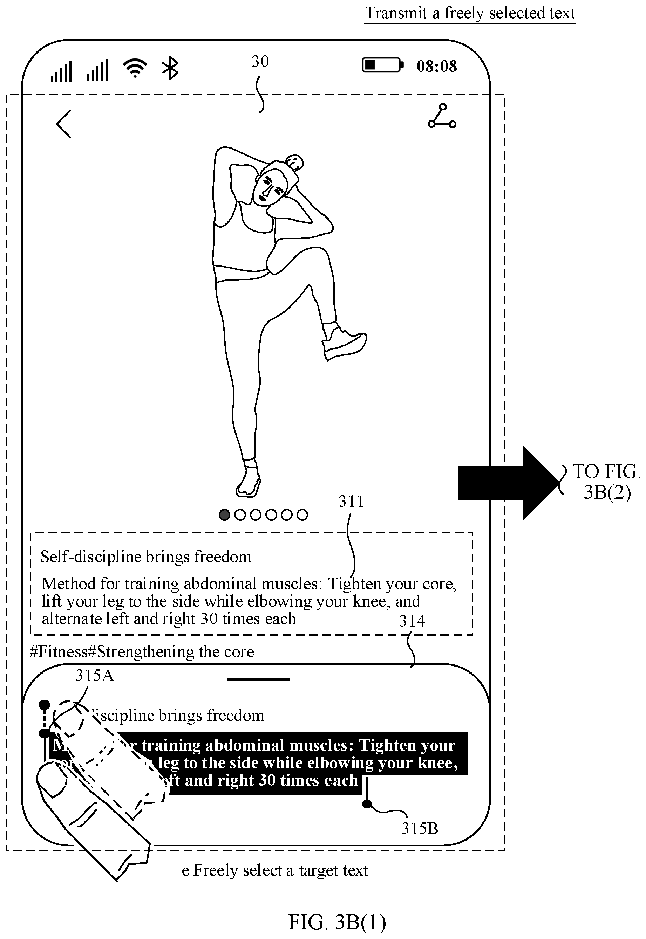

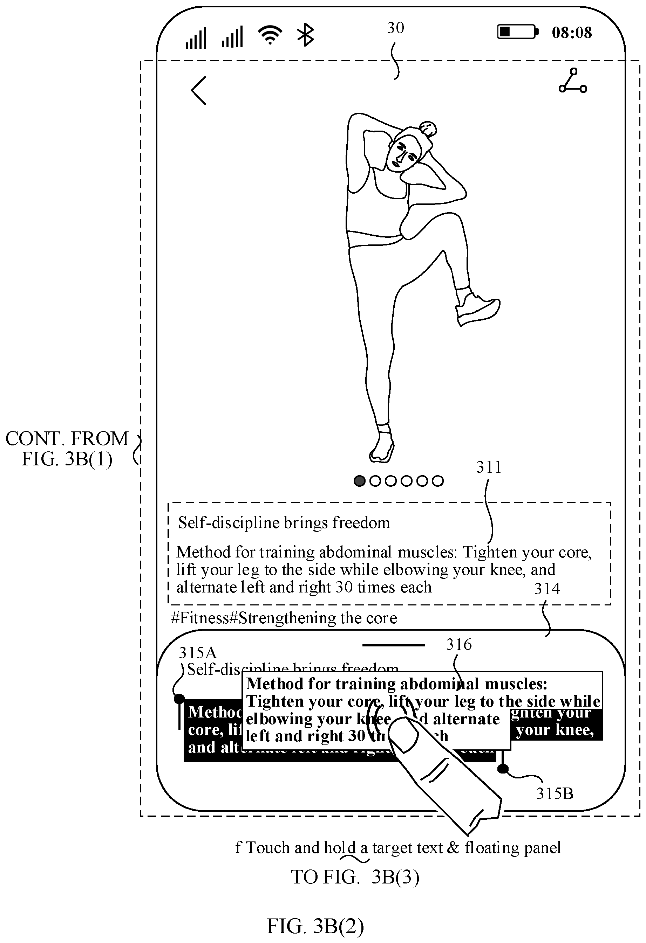

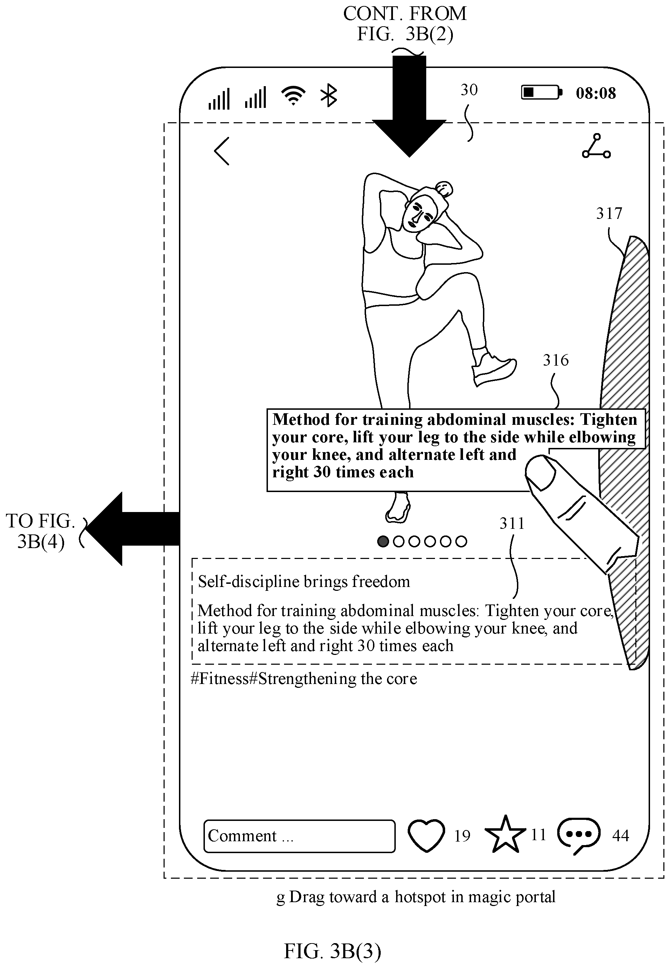

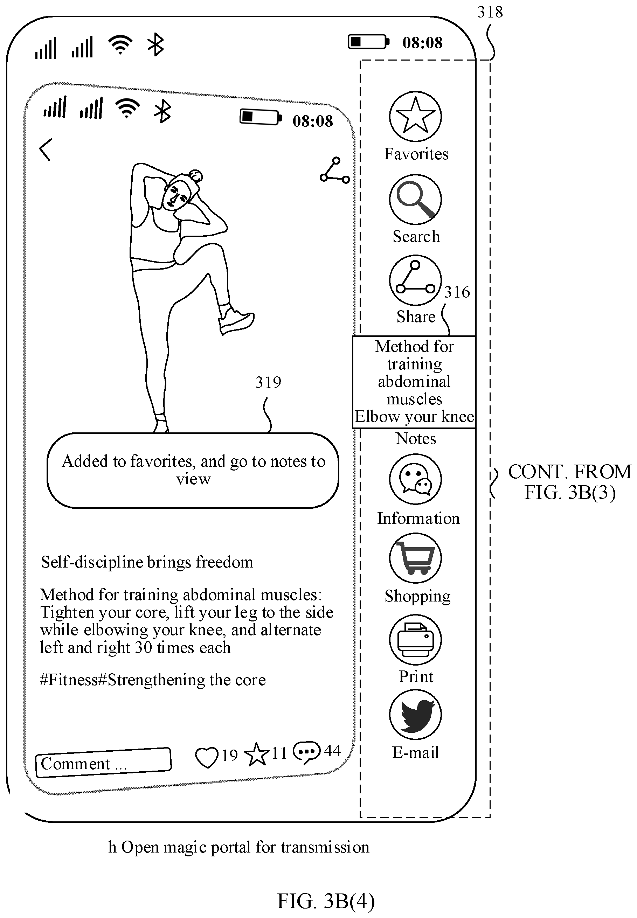

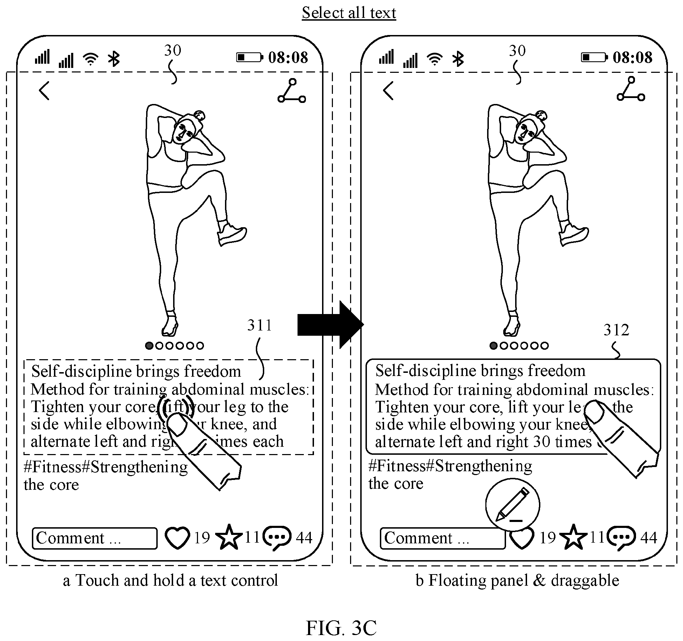

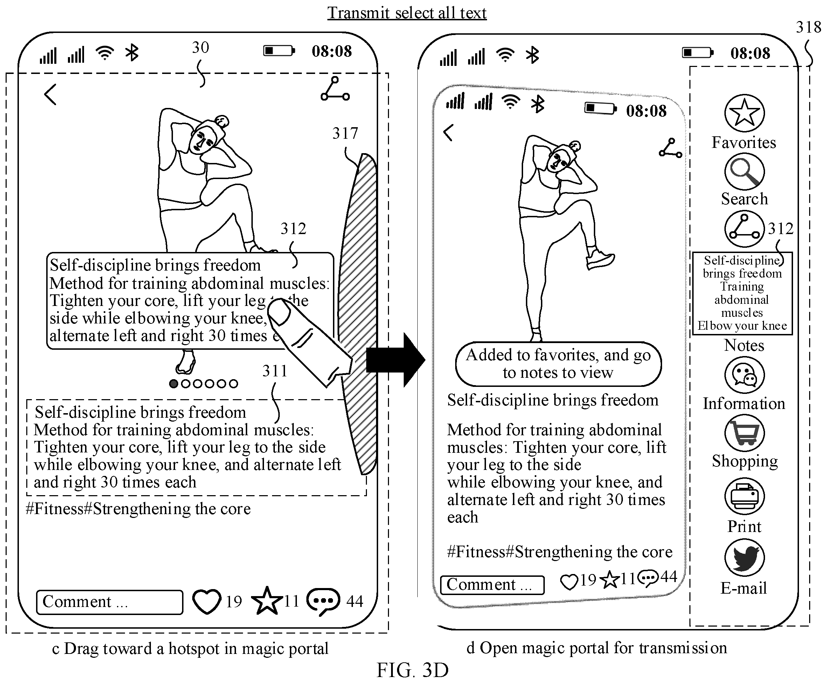

For the text content, this application provides four processing methods in total. For details, reference is made to the following detailed description.
**1.** **FIG. 3Ato FIG. 3D** **show operation interfaces involved through a first text content processing method.**

In the text content processing method 1, a user may drag a floating panel to an editing hotspot, to further freely select a text through an editing panel, and then drag the freely selected text to a target area and share the text to a target object. Alternatively, the user may further directly drag the floating panel to the target area and share the panel to the target object.
(1) In the text content processing method 1, for the floating panel, when the text included in the panel is in a none-selected state, the user may drag the panel to the editing hotspot, to further freely select a text through the editing panel, and then drag the freely selected text to the target area and share the text to the target object. For details, reference is made to the following descriptions of FIG. 3A to FIG. 3B(1), FIG. 3B(2), FIG. 3B(3), and FIG. 3B(4).
(2) In the text content processing method 1, for the floating panel, when the text included in the panel is in a none-selected state, the user may further directly drag the panel to the target area and share the panel to the target object. For details, reference is made to the following descriptions of FIG. 3C to FIG. 3D.

**Referring to** **FIG. 3A, FIG. 3A** **is a schematic diagram of a set of operation interfaces for freely selected texts according to an embodiment of this application.**

a in FIG. 3A shows an interface 30 on which an electronic device displays an application. Specifically, the interface 30 includes a text 311. The text 311 may be displayed through a text control provided by the application. The interface 30 of the application may be specifically an interface provided by a system-level application or a third-party application. This is not limited in this embodiment of this application. If the electronic device detects a touch and hold operation performed on a text 311, the electronic device displays a panel in response to the touch and hold operation. For details, reference is made to b in FIG. 3A.

b in FIG. 3A shows a panel 312 displayed by the electronic device. Specifically, in response to the touch and hold operation performed on the text 311, the electronic device displays a panel 312 and an icon 313 on an upper layer of the interface 30. The panel 312 includes the text 311, and a process of displaying the panel 312 brings floating visual experience to the user. In other words, the panel 312 is equivalent to an interface element in a suspended state. In some implementations, the panel 312 may further be implemented as a text control including the text 311, or an image control such as a preview or a thumbnail including the text 311. In some implementations, in response to the touch and hold operation performed on the text 311, the electronic device may obtain the text 311 by taking a screenshot, and then display the panel 312 including the text 311. In some implementations, after the panel 312 is displayed, if it is detected that the user ends the touch and hold operation (that is, the user releases a hand), the panel 312 may disappear after being continuously displayed for a preset duration (for example, 3s). If an operation of dragging the panel 312 by the user not releasing the hand is detected, or an operation of dragging the panel 312 within a preset duration (for example, 3s) after releasing the hand is detected, the panel 312 is to move a display area with a dragging trajectory of the user.

c in FIG. 3A shows an operation interface when an electronic device displays a dragging panel 312. Specifically, when an operation of dragging a panel 312 is detected, the electronic device further displays an icon 313. The icon 313 is used to instruct the user to continually drag the panel 312 to a hotspot of the icon 313 to edit a text 311.

d in FIG. 3A shows an editing panel 314 displayed by an electronic device. Specifically, if an operation of dragging a panel 312 to a hotspot of an icon 313 is detected, the electronic device displays the editing panel 314 and stops displaying a panel 312. The editing panel 314 includes a text 311, a cursor 315A, and a cursor 315B. A text between the cursor 315A and the cursor 315B is a selected text. In an initial editing panel 314 displayed by default, the text between the cursor 315A and the cursor 315B may default to selection of all or other. A user may adjust a selected target text by sliding the cursor 315A and the cursor 315B. In some implementations, the electronic device may further detect another editing operation performed by the user in the editing panel 314, for example, an operation such as deletion or writing. This is not limited in this embodiment of this application.

**Referring to** FIG. 3B(1), FIG. 3B(2), FIG. 3B(3), and FIG. 3B(4), FIG. 3B(1), FIG. 3B(2), FIG. 3B(3), and FIG. 3B(4) **are schematic diagrams of sets of operation interfaces for transmission of freely selected texts according to an embodiment of this application.**

e in FIG. 3B(1) shows an operation interface displayed by an electronic device when freely selecting a text through an editing panel 314. Specifically, the electronic device may adjust a selected state of text for a text 311 in the editing panel 314 based on a detected operation of sliding a cursor 315A and/or 315B in the editing panel 314. A text in a selected state is a target text described in this application.

f in FIG. 3B(2) shows an operation interface displayed by an electronic device for triggering dragging of a target text. Specifically, if a touch and hold operation performed on a target text in an editing panel 314 is detected, the electronic device may display a panel 316 in a suspended state corresponding to the target text. The panel 316 may be displayed on an upper layer of the target text in the editing panel 314. The panel 316 includes the target text. Optionally, when the target text has a lot of content, a part of the target text may be displayed in the panel 316, for example, a first sentence of the target text or an abstract of the target text. In some implementations, the panel 316 may further be implemented as a text control of the target text, or an image control such as a preview or a thumbnail of the target text.

g in FIG. 3B(3) shows a light band 317 displayed by an electronic device. Specifically, after the electronic device displays a panel 316 in a suspended state, the electronic device may display the light band 317 as a user drags the panel 316. The light band 317 is used to guide the user to drag the panel 316 to a hotspot in a magic portal to trigger opening of the magic portal (that is, a smart flow service is enabled). The light band 317 may be an interface element with attributes such as color, shadow, gradient, and graphic filling (for example, grid filling or slash filling). In some implementations, the light band 317 may further present a dynamic effect, for example, a change in a display area or a color. For example, the light band may change a display area based on a dragging area of the panel 316, bringing an operation experience of absorbing the suspended panel 316 for the user. In some other implementations, the light band 317 may further be a transparent area. In this way, an interface element displayed on a lower layer of the light band 317 may not be occluded.

h in FIG. 3B(4) shows an operation interface displayed by an electronic device for opening a magic portal for transmission. Specifically, when the electronic device detects that a panel 316 is dragged to a light band 317, the electronic device is triggered to open a magic portal. A menu bar 318 including icons of one or more candidate applications is displayed in the opened magic portal. The menu bar 318 may include a favorites icon, a search icon, a share icon, a note icon, an information icon, a shopping icon, a print icon, an email icon, and the like. In addition, when the electronic device detects that a user continues to drag the panel 316 to an icon (for example, a note application icon, that is, a target area) of any candidate application in the menu bar 318 and releases the panel, the electronic device may confirm that the note application is a target object. Subsequently, the electronic device may transmit a text (that is, a target text) corresponding to the panel 316 to the note application, and may further output corresponding prompt information 319. Outputting of the prompt information 319 is not limited. In some other implementations, the electronic device may further display a window provided by the target object, or directly jump to an interface provided by the target object.

A favorites application corresponding to the favorites icon in the menu bar 318 may be a system application that provides a global system favorites function. A note application corresponding to the note icon may be a system application, or may be a third-party application, which may provide functions such as recording and favorites in the application. A candidate application is an application screened by the electronic device from all installed applications that supports receiving of to-be-transmitted data. The electronic device may determine the candidate application based on an information type, semantic information, and the like of the to-be-transmitted data. The candidate application may include a global application (such as a favorites application, a search application, a share application, and an email application) that supports receiving of any type of data, or may include an application that supports receiving of only some types of data (such as a picture editing application that supports receiving of only pictures, and a navigation application that supports receiving of only a text). Different to-be-transmitted data may correspond to different menu bars.

Still referring to f, g, and h in FIG. 3B(2), FIG. 3B(3), and FIG. 3B(4) in a process of dragging a panel 316, a display form of the panel 316 is switched, including switching of a display size and/or display content. For example, when the panel 316 is dragged in a direction from an initial position toward a light band 317, a size of the panel 316 is reduced from a size shown in f in FIG. 3B(2) to a size shown in g in FIG. 3B(3). For another example, when the panel 316 is dragged to a light band area, the size of the panel 316 is further reduced from a size shown in g in FIG. 3B(3) to a size shown in h in FIG. 3B(4), and content of an included text is also reduced from content shown in g in FIG. 3B(3) to content shown in h in FIG. 3B(4). A change in the display form of the panel 316 in a dragging process is not specifically limited in this embodiment of this application.

Still referring to h in FIG. 3B(4), when an electronic device displays a menu bar 318 that includes an icon of a candidate application, the electronic device may adjust an original foreground user interface to a right perspective style, which vividly forms an "door opening" animation effect with the foregoing menu bar 318. The foreground user interface may be an interface formed by other content displayed on the display screen excluding a status bar, or may be all content displayed on the display screen including the status bar. This is not limited in this embodiment of this application.

**Referring to** **FIG. 3C, FIG. 3C** **is a schematic diagram of a set of operation interfaces for select-all texts according to an embodiment of this application.**

a and b in FIG. 3C show that through a touch and hold operation performed on a text 311, an electronic device is triggered to display a panel 312. The panel 312 includes all content in the text 311. a and b in FIG. 3C are the same as the foregoing a and b in FIG. 3A. For details, reference may be made to the descriptions of the foregoing a and b in FIG. 3A, and details are not described herein.

**Referring to** **FIG. 3D, FIG. 3D** **is a schematic diagram of a set of operation interfaces for transmission of select-all texts according to an embodiment of this application.**

c and d in FIG. 3D show that a panel 312 is dragged to a target area in a magic portal and released for transmission of all texts. The c and d in FIG. 3D are similar to the foregoing g and h in FIG. 3B(3) and FIG. 3B(4). A difference is that dragged and shared content is different. All texts in the panel 312 are dragged and shared herein, and the foregoing dragged and shared content is merely part of the content in the panel 312. For other similar parts, reference may be made to the foregoing descriptions of g and h in FIG. 3B(3) and FIG. 3B(4), and details are not described herein.

In an implementable manner, after an electronic device displays the panel 312 shown in b in FIG. 3C and before an operation of dragging the panel 312 shown in c in FIG. 3D is detected, a user may directly start to drag the panel 312 without releasing the hand after triggering display of the panel 312 through touching and holding of the text 311, or the user may release the hand after triggering the display of the panel 312 through touching and holding of the text 311, and start to drag the panel 312 within 3s after releasing the hand. This is not limited in this embodiment of this application. Optionally, in addition to 3s, a duration for which the panel 312 remains to be displayed may further be another duration. This is not limited in this embodiment of this application.

### Another content sharing manner

In the foregoing FIG. 3B(1), FIG. 3B(2), FIG. 3B(3), FIG. 3B(4), and FIG. 3D, only the "smart flow service" is used as an example to introduce an operation method for transmitting a selected text. In addition, an electronic device may further transmit the selected text through a "cross-device transmission service", a "split-screen transmission service", or the like. Operation methods corresponding to the latter two manners are similar to the operation method shown in FIG. 3B(1), FIG. 3B(2), FIG. 3B(3), and FIG. 3B(4) described above. A difference is that a panel 316 corresponding to selected content needs to be dragged to a target area different from the foregoing light band 317 and released, and shared target objects are also different. Specifically, the "cross-device transmission service" is used as an example. A target area may further be an edge area of a local electronic device (the edge area includes, for example, an area such as a left side edge, a right side edge, an upper side edge, or a lower side edge of a display screen of the local device, and a specific edge area depends on a side of a neighboring device close to the local device). A target object is a neighboring device for collaborative processing. The "split-screen transmission service" is used as an example. A target area may be another split-screen area of an electronic device, and a target object is an object in the another split-screen area.

In this embodiment of this application, a user-defined name involved in the foregoing text content processing manner 1 may further be referred to as another name. Details are as follows.

An application providing an interface 30 may further be referred to as a first application.

A text 311 may further be referred to as a first text. A text control for displaying the text 311 may further be referred to as a first control. A touch and hold operation performed on the text 311 may further be referred to as a first operation. In this embodiment of this application, in addition to the touch and hold operation, the first operation may further be an operation of another type. This is not limited in this embodiment of this application.

The panel 312 is also referred to as a first panel. An icon 313 is also referred to as a first icon. A display area of the icon 313 is also referred to as a first area. An operation of dragging the panel 312 to the icon 313 may further be referred to as a second operation. An operation of directly dragging the panel 312 to a light band 317 may further be referred to as a third operation. An operation of dragging the panel 312 to a note application in a menu bar 318 and releasing the panel may further be referred to as a fourth operation.

An editing panel 314 is also referred to as a second panel. An area where the light band 317 is located may further be referred to as a second area. An operation of dragging a target text in the second panel to the light band 317 may further be referred to as a third operation.

The note application in the menu bar 318 may further be referred to as a second application. An operation of dragging the target text to an icon of the note application and releasing the target text may further be referred to as a fourth operation.

A touch and hold operation performed on a blank in the editing panel may further be referred to as a fifth operation. In addition to the touch and hold operation, the fifth operation may further be an operation of another type, such as a tapping operation. This is not limited in embodiments of this application.

The panel 316 is also referred to as a third panel. An operation of dragging the panel 316 to the menu bar 318 may further be referred to as a third operation. The operation of dragging the panel 316 to the note application in the menu bar 318 and then releasing the panel may further be referred to as a fourth operation.

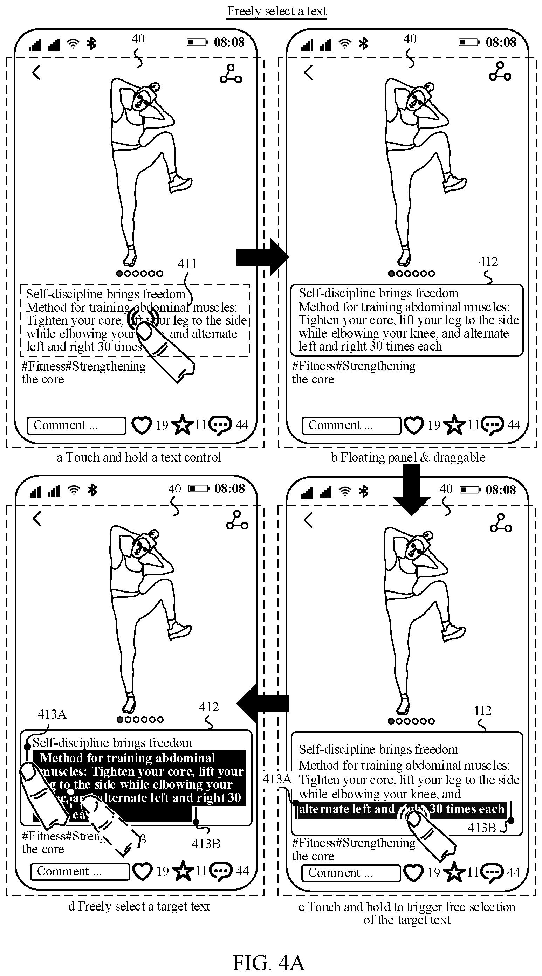

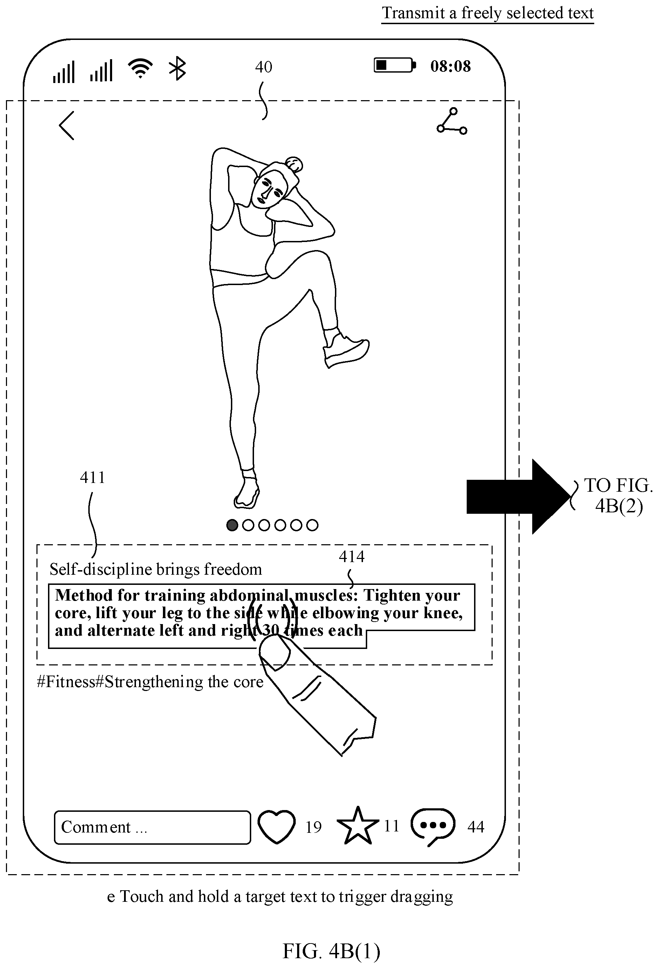

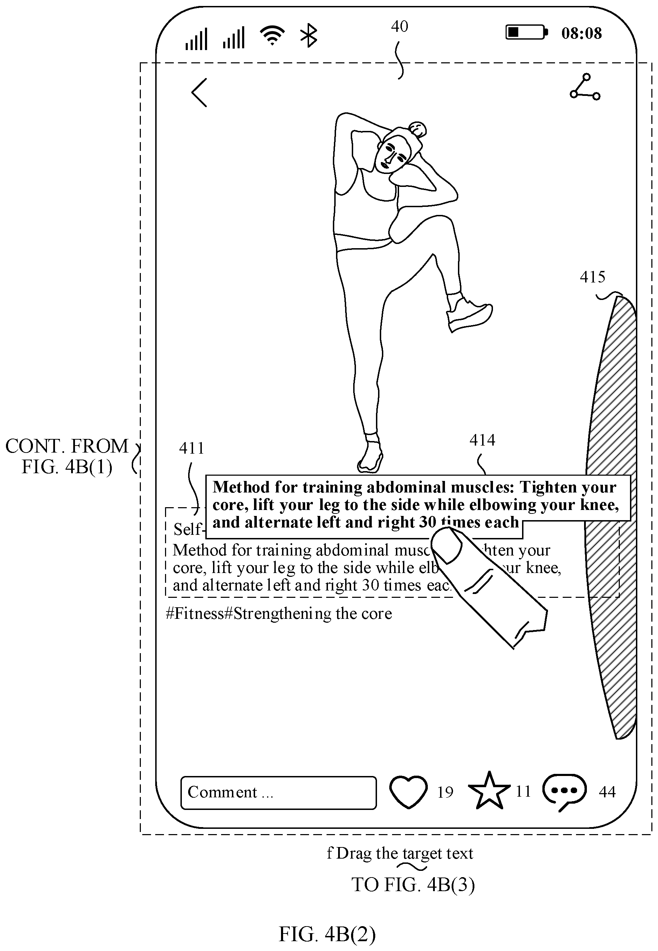

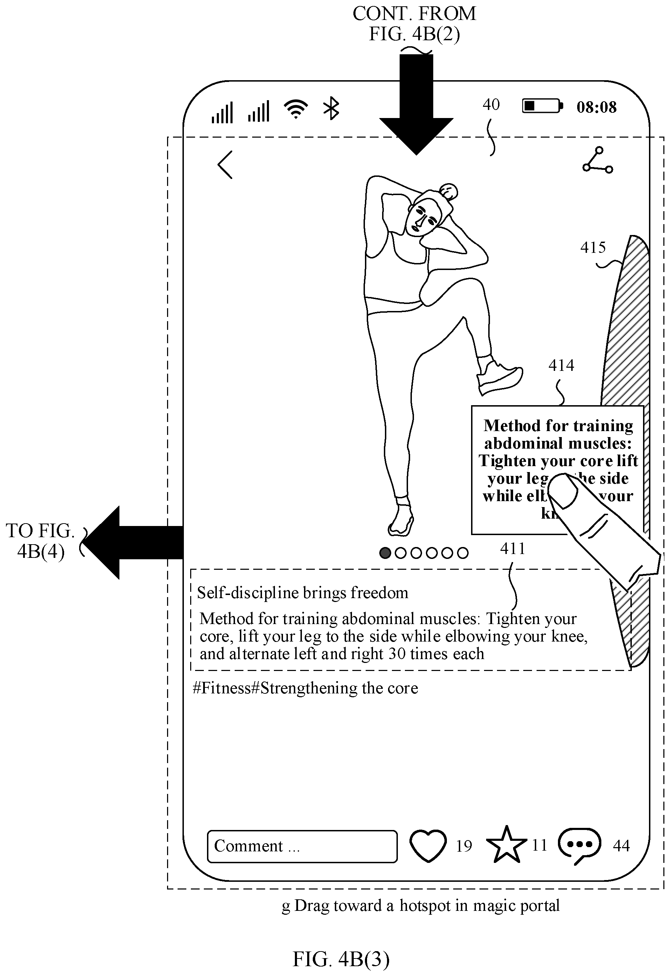

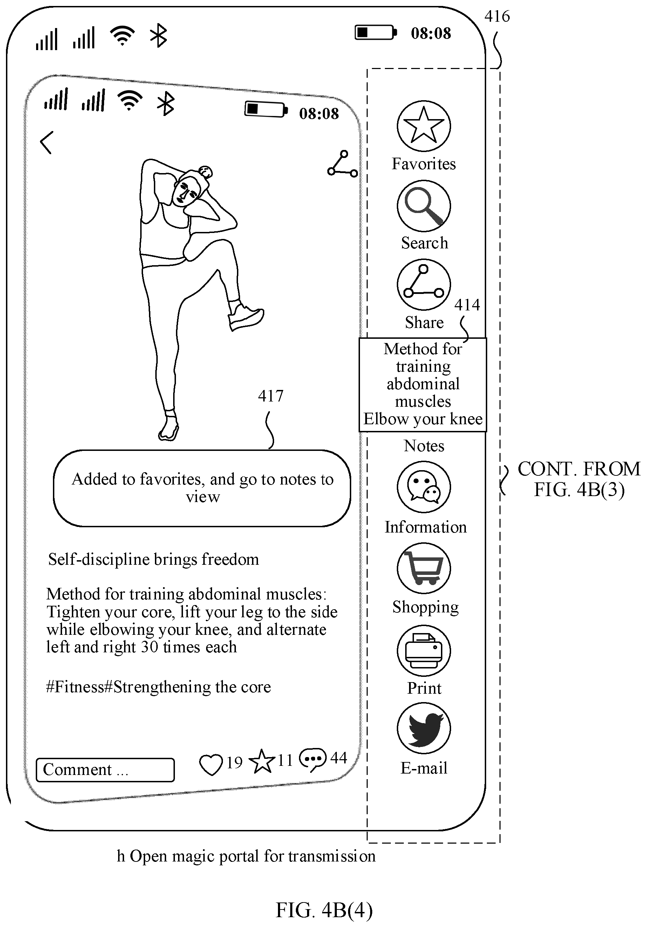

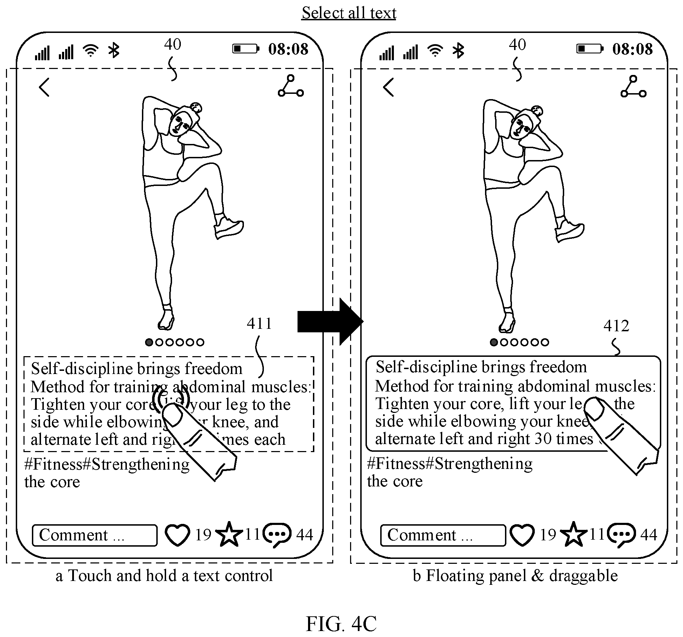

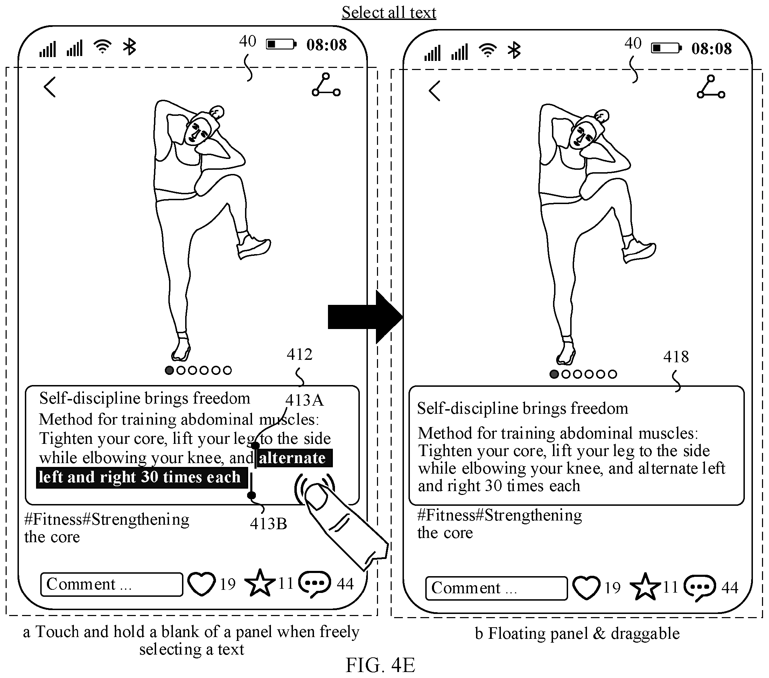

2. FIG. 4A to FIG. 4F show operation interfaces involved through a second text content processing method.
(1) In the text content processing method 2, for a floating panel, when the text included in the panel is in a none-selected state, the user may perform an editing operation on the panel, to further freely select a text through the panel, and then drag the freely selected text to the target area and share the text to the target object. For details, reference is made to the following descriptions of FIG. 4A to FIG. 4B(1), FIG. 4B(2), FIG. 4B(3), and FIG. 4B(4).
(2) In the text content processing method 2, for the floating panel, when the text included in the panel is in a none-selected state, the user may further directly drag the panel to the target area and share the panel to the target object. For details, reference is made to the following descriptions of FIG. 4C to FIG. 4D.
(3) In the text content processing method 2, for a panel supporting free selection of text, the user may further trigger displaying of a new panel by pressing a blank of the panel. Texts included in the new panel are in a none-selected state, and then the new panel is dragged to a target area and shared to the target object. For details, reference is made to the following descriptions of FIG. 4E to FIG. 4F.

**Referring to** **FIG. 4A, FIG. 4A** **is a schematic diagram of another set of operation interfaces for freely selected texts according to an embodiment of this application.**

a in FIG. 4A shows an interface 40 on which an electronic device displays an application. Specifically, the interface 40 includes a text 411. The text 411 may be displayed through a text control provided by the application. The interface 40 of the application may be specifically an interface provided by a system-level application or a third-party application. This is not limited in this embodiment of this application. If the electronic device detects a touch and hold operation performed on a text 411, the electronic device displays a panel in response to the touch and hold operation. For details, reference is made to b in FIG. 4A.

b in FIG. 4A shows a panel 412 displayed by the electronic device. Specifically, in response to the touch and hold operation performed on the text 411, the electronic device displays a panel 412 on an upper layer of the interface 40. The panel 412 includes the text 411, and a process of displaying the panel 412 brings floating visual experience to the user. In other words, the panel 412 is equivalent to an interface element in a suspended state. In some implementations, the panel 412 may further be implemented as a text control including the text 411, or an image control such as a preview or a thumbnail including the text 411. In some implementations, after the panel 412 is displayed, if it is detected that the user ends the touch and hold operation (that is, the user releases a hand), the panel 412 may disappear after being continuously displayed for a preset duration (for example, 3s). If an operation of dragging the panel 412 by the user not releasing the hand is detected, or an operation of dragging the panel 412 within a preset duration (for example, 3s) after releasing the hand is detected, the panel 412 is to move a display area with a dragging trajectory of the user.

c in FIG. 4A shows an operation interface for triggering free selection of a target text. Specifically, when a touch and hold operation for dragging a panel 412 is detected, an electronic device displays a cursor 413A and a cursor 413B. A text between the cursor 413A and the cursor 413B is a selected text. The text between the cursor 413A and the cursor 413B may default to a text corresponding to a position where the user performs the touch and hold operation. A user may adjust a selected target text by sliding the cursor 413A and the cursor 413B. In some implementations, the electronic device may further detect another editing operation performed by the user in the panel 412, for example, an operation such as deletion or writing. This is not limited in this embodiment of this application.

d in FIG. 4A shows an operation interface displayed by an electronic device when freely selecting a text through a panel 412. Specifically, the electronic device may adjust a selected state of text for a text 411 in the panel 412 based on a detected operation of sliding a cursor 413A and/or 413B in the panel 412. A text in a selected state is a target text described in this application.

**Referring to** FIG. 4B(1), FIG. 4B(2), FIG. 4B(3), and FIG. 4B(4), FIG. 4B(1), FIG. 4B(2), FIG. 4B(3), and FIG. 4B(4) **are schematic diagrams of other sets of operation interfaces for transmission of freely selected texts according to an embodiment of this application.**

e in FIG. 4B(1) shows an operation interface displayed by an electronic device for triggering dragging of a target text. Specifically, when a touch and hold operation performed on a target text is detected, the electronic device may display a panel 414 in a suspended state corresponding to the target text. In a process of displaying the panel 414, display of a panel 412 is stopped, but display of an original text 411 in an interface 40 is not stopped, thereby bringing a visual effect to a user that a text other than the target text in the panel 412 sinks from the panel 412. The panel 414 may be located at a position of a touch point on a display screen when a user performs a touch and hold operation. The panel 414 includes the target text. Optionally, when the target text has a lot of content, a part of the target text may be displayed in the panel 414, for example, a first sentence of the target text or an abstract of the target text. In some implementations, the panel 414 may further be implemented as a text control of the target text, or an image control such as a preview or a thumbnail of the target text.

f and g in FIG. 4B(2) and FIG. 4B(3) show an operation interface displayed by an electronic device for dragging a target text to a hotspot in a magic portal. Specifically, after the electronic device displays a panel 414 in a suspended state, the electronic device may display the light band 415 as a user drags the panel 414. The light band 415 is used to guide the user to drag the panel 414 to a hotspot in a magic portal to trigger opening of the magic portal (that is, a smart flow service is enabled). The light band 415 may be an interface element with attributes such as color, shadow, gradient, and graphic filling (for example, grid filling or slash filling). In some implementations, the light band 415 may further present a dynamic effect, for example, a change in a display area or a color. For example, the light band may change a display area based on a dragging area of the panel 414, bringing an operation experience of absorbing the suspended panel 414 for the user. In some implementations, in a process of dragging a panel 414, a display form of the panel 414 is switched, including switching of a display size and/or display content. For example, when the panel 414 is dragged in a direction from an initial position toward a light band 415, a size of the panel 414 is reduced from a size shown in f in FIG. 4B(2) to a size shown in g in FIG. 4B(3), and content of an included text is also reduced from content shown in f in FIG. 4B(2) to content shown in g in FIG. 4B(3). A change in the display form of the panel 414 in a dragging process is not specifically limited in this embodiment of this application. In some other implementations, the light band 415 may further be a transparent area. In this way, an interface element displayed on a lower layer of the light band 415 may not be occluded.

h in FIG. 4B(4) shows an operation interface displayed by an electronic device for opening a magic portal for transmission. Specifically, when the electronic device detects that a panel 414 is dragged to a light band 415, the electronic device is triggered to open a magic portal. A menu bar 416 including icons of one or more candidate applications is displayed in the opened magic portal. The menu bar 416 may include a favorites icon, a search icon, a share icon, a note icon, an information icon, a shopping icon, a print icon, an email icon, and the like. In addition, when the electronic device detects that a user continues to drag the panel 414 to an icon (for example, a note application icon, that is, a target area) of any candidate application in the menu bar 416 and releases the panel, the electronic device may confirm that the note application is a target object. Subsequently, the electronic device may transmit a text (that is, a target text) corresponding to the panel 414 to the note application, and may further output corresponding prompt information 417. Outputting of the prompt information 417 is not limited. In some other implementations, the electronic device may further display a window provided by the target object, or directly jump to an interface provided by the target object.

Still referring to h in FIG. 4B(4), a favorites application corresponding to the favorites icon in the menu bar 416 may be a system application that provides a global system favorites function. A note application corresponding to the note icon may be a system application, or may be a third-party application, which may provide functions such as recording and favorites in the application. A candidate application is an application screened by the electronic device from all installed applications that supports receiving of to-be-transmitted data. The electronic device may determine the candidate application based on an information type, semantic information, and the like of the to-be-transmitted data. The candidate application may include a global application (such as a favorites application, a search application, a share application, and an email application) that supports receiving of any type of data, or may include an application that supports receiving of only some types of data (such as a picture editing application that supports receiving of only pictures, and a navigation application that supports receiving of only a text). Different to-be-transmitted data may correspond to different menu bars.

Still referring to h in FIG. 4B(4), when an electronic device displays a menu bar 416 that includes an icon of a candidate application, the electronic device may adjust an original foreground user interface to a right perspective style, which vividly forms an "door opening" animation effect with the foregoing menu bar 416. The foreground user interface may be an interface formed by other content displayed on the display screen excluding a status bar, or may be all content displayed on the display screen including the status bar. This is not limited in this embodiment of this application.

**Referring to** **FIG. 4C, FIG. 4C** **is a schematic diagram of another set of operation interfaces for select-all texts according to an embodiment of this application.**

a and b in FIG. 4C show that through a touch and hold operation performed on a text 411, an electronic device is triggered to display a panel 412. The panel 412 includes all content in the text 411. a and b in FIG. 4C are the same as the foregoing a and b in FIG. 4A. For details, reference may be made to the descriptions of the foregoing a and b in FIG. 4A, and details are not described herein.

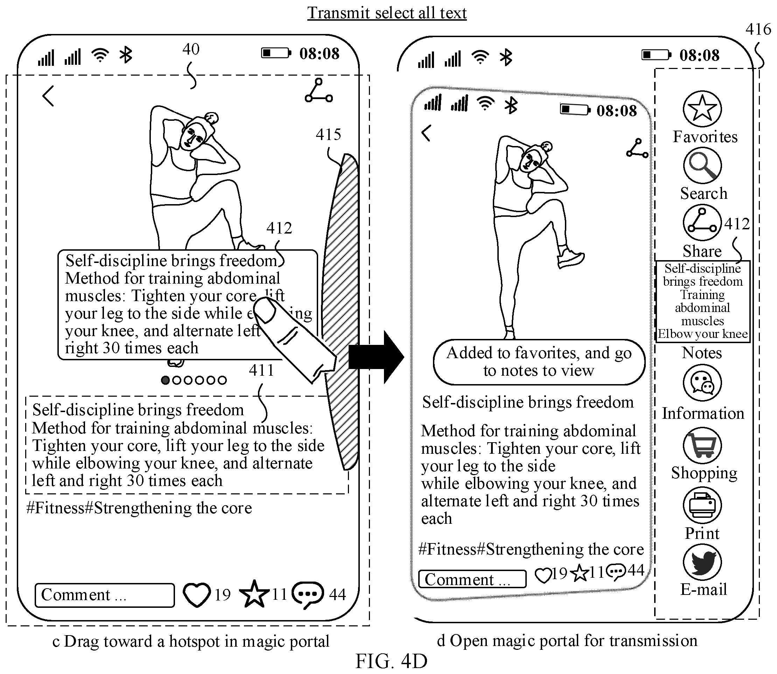

**Referring to** **FIG. 4D, FIG. 4D** **is a schematic diagram of another set of operation interfaces for transmission of select-all texts according to an embodiment of this application.**

c and d in FIG. 4D show that a panel 412 is dragged to a target area in a magic portal and released for transmission of all texts. The c and d in FIG. 4D are similar to the foregoing g and h in FIG. 4B(3) and FIG. 4B(4). A difference is that dragged and shared content is different. All texts in the panel 412 are dragged and shared herein, and the foregoing dragged and shared content is merely part of the content in the panel 412. For other similar parts, reference may be made to the foregoing descriptions of g and h in FIG. 4B(3) and FIG. 4B(4), and details are not described herein.

In an implementable manner, after an electronic device displays the panel 412 shown in b in FIG. 4C and before an operation of dragging the panel 412 shown in c in FIG. 4D is detected, a user may directly start to drag the panel 412 without releasing the hand after triggering display of the panel 412 through touching and holding of the text 411, or the user may release the hand after triggering the display of the panel 412 through touching and holding of the text 411, and start to drag the panel 412 within 3s after releasing the hand. This is not limited in this embodiment of this application. Optionally, in addition to 3s, a duration for which the panel 412 remains to be displayed may further be another duration. This is not limited in this embodiment of this application.

**Referring to** **FIG. 4E, FIG. 4E** **is a schematic diagram of another set of operation interfaces for select-all texts according to an embodiment of this application.**

a and b in FIG. 4E show that an electronic device is triggered to display a panel 418 through a touch and hold operation performed on a blank of a panel 412 when a text is freely selected. The panel 418 includes all content in a text 411. In other words, the panel 418 is equivalent to switching the panel 412 that may be in a state where a text may be freely selected to a state where a text cannot be freely selected. In some implementations, the panel 418 shown in b in FIG. 4E and the panel 412 shown in a in FIG. 4E may be a same panel. A difference is that no text in the panel 418 is in a selected state and part of the text in the panel 412 is in a selected state. In some other implementations, the panel 418 shown in b in FIG. 4E and the panel 412 shown in a in FIG. 4E are not the same panel. When the panel 418 is displayed, the panel 412 disappears. The a and b in FIG. 4C are similar to the foregoing a and b in FIG. 4A. For details on the similarities, reference may be made to the foregoing descriptions of a and b in FIG. 4A, and details are not described herein.

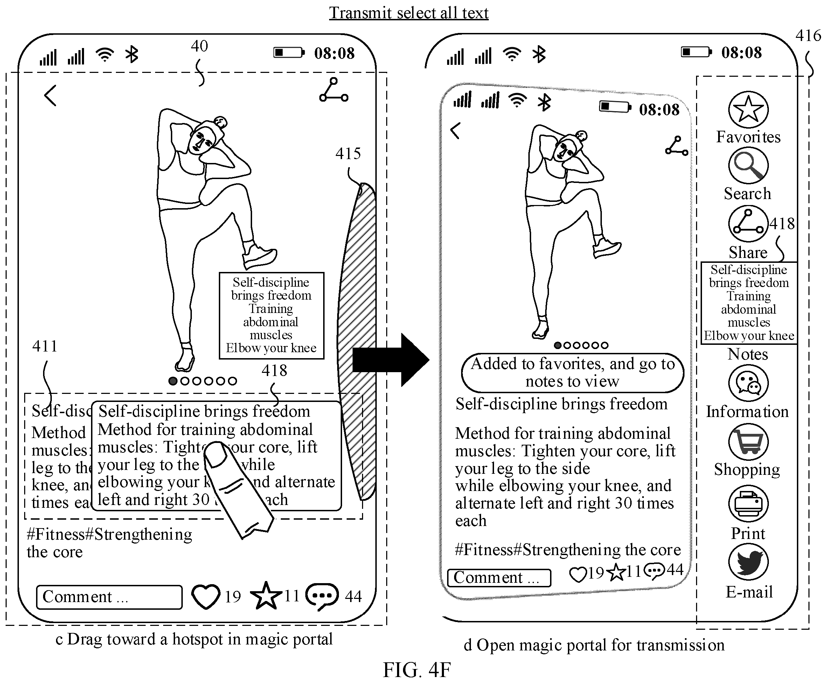

**Referring to** **FIG. 4F, FIG. 4F** **is a schematic diagram of another set of operation interfaces for transmission of select-all texts according to an embodiment of this application.**

c and d in FIG. 4F show that a panel 418 is dragged to a target area in a magic portal and released for transmission of all texts. The c and d in FIG. 4F are similar to the foregoing g and h in FIG. 4B(3) and FIG. 4B(4). A difference is that dragged and shared content is different. All texts in the panel 418 are dragged and shared herein, and the foregoing dragged and shared content is merely part of the content in the panel 418. For other similar parts, reference may be made to the foregoing descriptions of g and h in FIG. 4B(3) and FIG. 4B(4), and details are not described herein.

In an implementable manner, after an electronic device displays the panel 418 shown in b in FIG. 4E and before an operation of dragging the panel 418 shown in c in FIG. 4F is detected, a user may directly start to drag the panel 418 without releasing the hand after triggering display of the panel 418 through touching and holding of a blank of the panel 412, or the user may release the hand after triggering the display of the panel 418 through touching and holding of the blank of the panel 412, and start to drag the panel 418 within 3s after releasing the hand. This is not limited in this embodiment of this application. Optionally, in addition to 3s, a duration for which the panel 418 remains to be displayed may further be another duration. This is not limited in this embodiment of this application.

### Another content sharing manner

In the foregoing FIG. 4B(1), FIG. 4B(2), FIG. 4B(3), FIG. 4B(4), FIG. 4D, and FIG. 4F, only the "smart flow service" is used as an example to introduce an operation method for transmitting a selected text. In addition, an electronic device may further transmit the selected text through a "cross-device transmission service", a "split-screen transmission service", or the like. Operation methods corresponding to the latter two manners are similar to the operation method shown in FIG. 4B(1), FIG. 4B(2), FIG. 4B(3), and FIG. 4B(4) described above. A difference is that a panel 414 corresponding to selected content needs to be dragged to a target area different from the foregoing light band 415 and released, and shared target objects are also different. Specifically, the "cross-device transmission service" is used as an example. The target area may further be an edge area of a local electronic device (the edge area is specifically an area where a neighboring device is close to the local device), and a target object is a neighboring device for collaborative processing. The "split-screen transmission service" is used as an example. A target area may be another split-screen area of an electronic device, and a target object is an object in the another split-screen area.

In this embodiment of this application, a user-defined name involved in the foregoing text content processing manner 2 may further be referred to as another name. Details are as follows.

An application providing an interface 40 may further be referred to as a first application.

A text 411 may further be referred to as a first text. A touch and hold operation performed on the text 411 may further be referred to as a first operation. In this embodiment of this application, in addition to the touch and hold operation, the first operation may further be an operation of another type. This is not limited in this embodiment of this application.

The panel 412 is also referred to as a first panel. The touch and hold operation performed on the panel 412 may further be referred to as an eleventh operation. In this embodiment of this application, in addition to the touch and hold operation, the eleventh operation may further be an operation of another type such as a tapping operation. This is not limited in embodiments of this application.

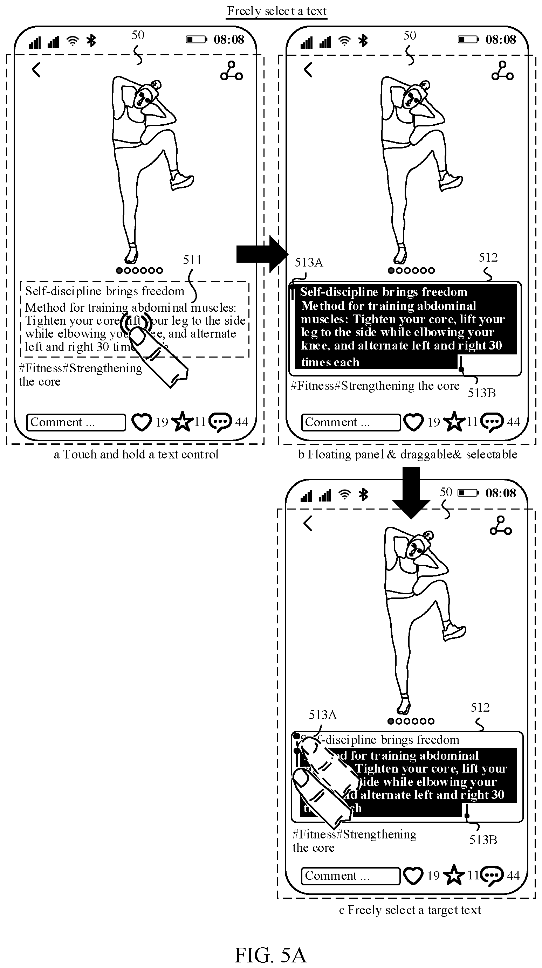

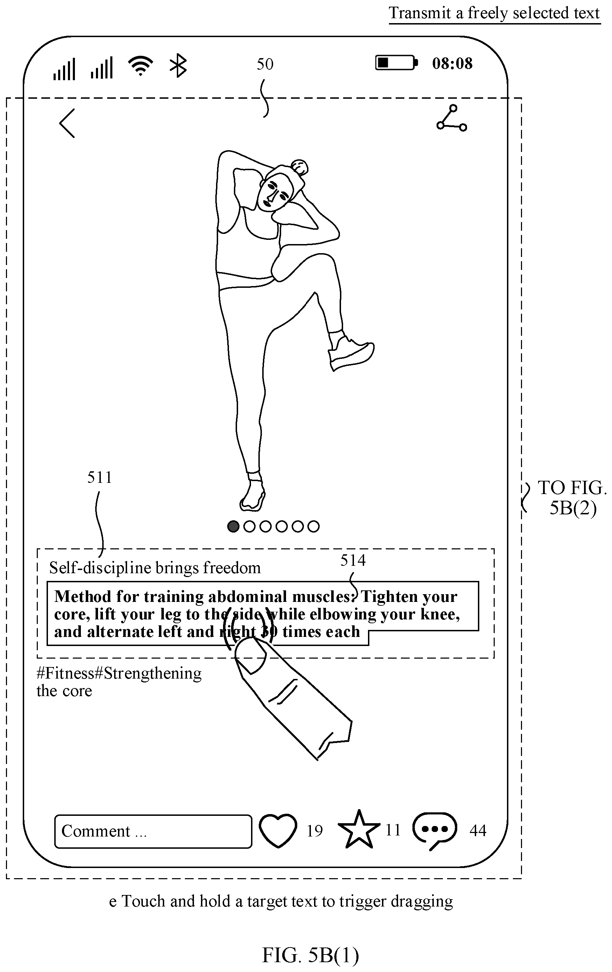

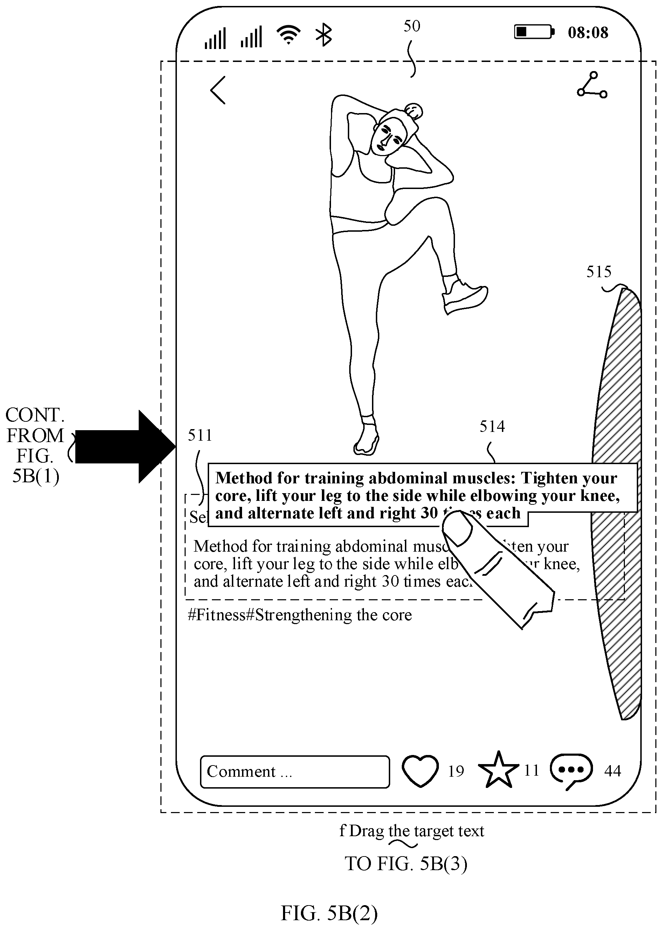

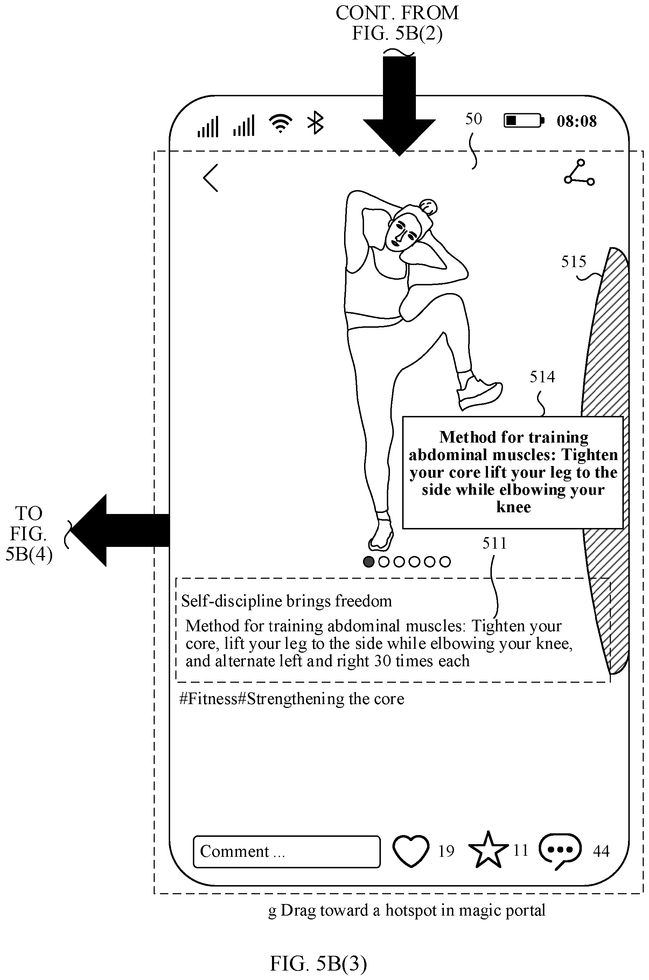

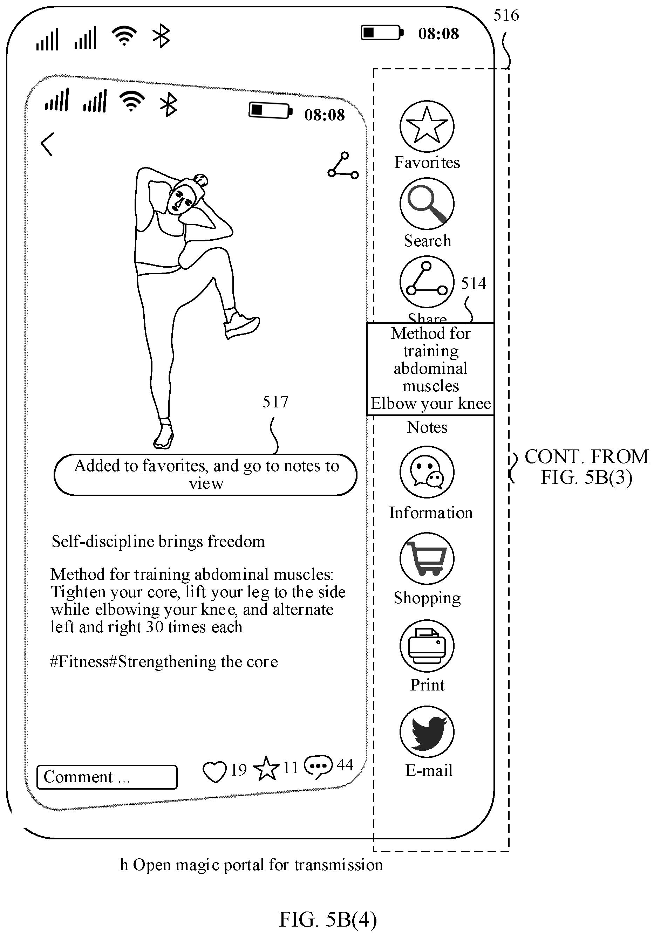

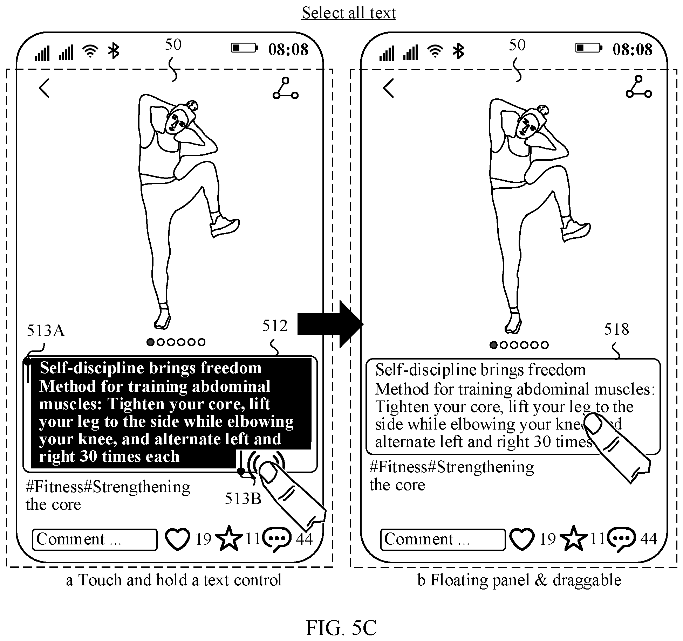

**3.** **FIG. 5A to FIG. 5D** **show operation interfaces involved through a third content processing method.**
(1) In the text content processing method 3, for a floating panel including all selected texts, the user may perform an editing operation on the panel, to further freely select a text through the panel, and then drag the freely selected text to the target area and share the text to the target object. For details, reference is made to the following descriptions of FIG. 5A to FIG. 5B(1), FIG. 5B(2), FIG. 5B(3), and FIG. 5B(4).
(2) In the text content processing method 3, for the floating panel including all selected texts, the user may further drag the panel to a target area by touching and holding a blank of the panel and share the panel to the target object. For details, reference is made to the following descriptions of FIG. 5C to FIG. 5D.

**Referring to** **FIG. 5A, FIG. 5A** **is a schematic diagram of another set of operation interfaces for freely selected texts according to an embodiment of this application.**

a in FIG. 5A shows an interface 50 on which an electronic device displays an application. Specifically, the interface 50 includes a text 511. The text 511 may be displayed through a text control provided by the application. The interface 50 of the application may be specifically an interface provided by a system-level application or a third-party application. This is not limited in this embodiment of this application. If the electronic device detects a touch and hold operation performed on a text 511, the electronic device displays a panel in response to the touch and hold operation. For details, reference is made to b in FIG. 5A.

b in FIG. 5A shows a panel 512 displayed by the electronic device. Specifically, in response to a touch and hold operation performed on the text 511, the electronic device displays the panel 512 on an upper layer of the interface 50. The panel 512 includes the text 511, a cursor 513A, and a cursor 513B. A text between the cursor 513A and the cursor 513B is a selected text. The selected text between the cursor 513A and the cursor 513B may default to the entire text 511. In addition, a process of displaying the panel 512 brings floating visual experience to the user. In other words, the panel 512 is equivalent to an interface element in a suspended state. In some implementations, the panel 512 may further be implemented as a text control including the text 511, or an image control such as a preview or a thumbnail including the text 511. In some implementations, after the panel 512 is displayed, if it is detected that the user ends the touch and hold operation (that is, the user releases a hand), the panel 512 may disappear after being continuously displayed for a preset duration (for example, 3s). If an operation of dragging the panel 512 by the user not releasing the hand is detected, or an operation of dragging the panel 512 within a preset duration (for example, 3s) after releasing the hand is detected, the panel 512 is to move a display area with a dragging trajectory of the user.

c in FIG. 5A shows an operation interface displayed by the electronic device when freely selecting a text. Specifically, the electronic device may adjust a selected state of text for a text 511 in the panel 512 based on a detected operation of sliding a cursor 513A and/or 513B in the panel 512. A text in a selected state is a target text described in this application. In some implementations, in addition to adjusting the selected target text by sliding the cursor 513A and the cursor 513B, the user may further perform another editing operation such as an operation such as deletion or writing. This is not limited in this embodiment of this application.

**Referring to** FIG. 5B(1), FIG. 5B(2), FIG. 5B(3), and FIG. 5B(4), FIG. 5B(1), FIG. 5B(2), FIG. 5B(3), and FIG. 5B(4) **are schematic diagrams of other sets of operation interfaces for transmission of freely selected texts according to an embodiment of this application.**

e in FIG. 5B(1) shows an operation interface displayed by an electronic device for triggering dragging of a target text. Specifically, when a touch and hold operation performed on a target text is detected, the electronic device may display a panel 514 in a suspended state corresponding to the target text. In a process of displaying the panel 514, display of a panel 512 is stopped, but display of an original text 511 in an interface 50 is not stopped, thereby bringing a visual effect to a user that a text other than the target text in the panel 512 sinks from the panel 512. The panel 514 may be located at a position of a touch point on a display screen when a user performs a touch and hold operation. The panel 514 includes the target text. Optionally, when the target text has a lot of content, a part of the target text may be displayed in the panel 514, for example, a first sentence of the target text or an abstract of the target text. In some implementations, the panel 514 may further be implemented as a text control of the target text, or an image control such as a preview or a thumbnail of the target text.

f and g in FIG. 5B(2) and FIG. 5B(3) show an operation interface displayed by an electronic device for dragging a target text to a hotspot in a magic portal. Specifically, after the electronic device displays a panel 514 in a suspended state, the electronic device may display the light band 515 as a user drags the panel 514. The light band 515 is used to guide the user to drag the panel 514 to a hotspot in a magic portal to trigger opening of the magic portal (that is, a smart flow service is enabled). The light band 515 may be an interface element with attributes such as color, shadow, gradient, and graphic filling (for example, grid filling or slash filling). In some implementations, the light band 515 may further present a dynamic effect, for example, a change in a display area or a color. For example, the light band may change a display area based on a dragging area of the panel 514, bringing an operation experience of absorbing the suspended panel 514 for the user. In some implementations, in a process of dragging a panel 514, a display form of the panel 514 is switched, including switching of a display size and/or display content. For example, when the panel 514 is dragged in a direction from an initial position toward a light band 515, a size of the panel 514 is reduced from a size shown in f in FIG. 5B(2) to a size shown in g in FIG. 5B(3), and content of an included text is also reduced from content shown in f in FIG. 5B(2) to content shown in g in FIG. 5B(3). A change in the display form of the panel 514 in a dragging process is not specifically limited in this embodiment of this application. In some other implementations, the light band 515 may further be a transparent area. In this way, an interface element displayed on a lower layer of the light band 515 may not be occluded.

h in FIG. 5B(4) shows an operation interface displayed by an electronic device for opening a magic portal for transmission. Specifically, when the electronic device detects that a panel 514 is dragged to a light band 515, the electronic device is triggered to open a magic portal. A menu bar 516 including icons of one or more candidate applications is displayed in the opened magic portal. The menu bar 516 may include a favorites icon, a search icon, a share icon, a note icon, an information icon, a shopping icon, a print icon, an email icon, and the like. In addition, when the electronic device detects that a user continues to drag the panel 514 to an icon (for example, a note application icon, that is, a target area) of any candidate application in the menu bar 516 and releases the panel, the electronic device may confirm that the note application is a target object. Subsequently, the electronic device may transmit a text (that is, a target text) corresponding to the panel 514 to the note application, and may further output corresponding prompt information 517. Outputting of the prompt information 517 is not limited. In some other implementations, the electronic device may further display a window provided by the target object, or directly jump to an interface provided by the target object.

Still referring to h in FIG. 5B(4), a favorites application corresponding to the favorites icon in the menu bar 516 may be a system application that provides a global system favorites function. A note application corresponding to the note icon may be a system application, or may be a third-party application, which may provide functions such as recording and favorites in the application. A candidate application is an application screened by the electronic device from all installed applications that supports receiving of to-be-transmitted data. The electronic device may determine the candidate application based on an information type, semantic information, and the like of the to-be-transmitted data. The candidate application may include a global application (such as a favorites application, a search application, a share application, and an email application) that supports receiving of any type of data, or may include an application that supports receiving of only some types of data (such as a picture editing application that supports receiving of only pictures, and a navigation application that supports receiving of only a text). Different to-be-transmitted data may correspond to different menu bars.

Still referring to h in FIG. 5B(4), when an electronic device displays a menu bar 516 that includes an icon of a candidate application, the electronic device may adjust an original foreground user interface to a right perspective style, which vividly forms an "door opening" animation effect with the foregoing menu bar 516. The foreground user interface may be an interface formed by other content displayed on the display screen excluding a status bar, or may be all content displayed on the display screen including the status bar. This is not limited in this embodiment of this application.

Still referring to h in FIG. 5B(4), when an electronic device displays a menu bar 516 that includes an icon of a candidate application, the electronic device may adjust an original foreground user interface to a right perspective style, which vividly forms an "door opening" animation effect with the foregoing menu bar 516. The foreground user interface may be an interface formed by other content displayed on the display screen excluding a status bar, or may be all content displayed on the display screen including the status bar. This is not limited in this embodiment of this application.

**Referring to** **FIG. 5C, FIG. 5C** **is a schematic diagram of another set of operation interfaces for select-all texts according to an embodiment of this application.**

a and b in FIG. 5C show that an electronic device is triggered to display a panel 518 through a touch and hold operation performed on a blank in a panel 512. The panel 518 includes all content in a text 511. In some implementations, the panel 518 shown in b in FIG. 5C and the panel 512 shown in a in FIG. 5C may be a same panel. A difference is that no text in the panel 518 is in a selected state and part of the text in the panel 512 is in a selected state. In some other implementations, the panel 518 shown in b in FIG. 5C and the panel 512 shown in a in FIG. 5C are not the same panel. When the panel 518 is displayed, the panel 512 disappears. In addition, a in FIG. 5C is the same as the foregoing b in FIG. 5A. For details, reference may be made to the descriptions of the foregoing a in FIG. 5A, and details are not described herein.

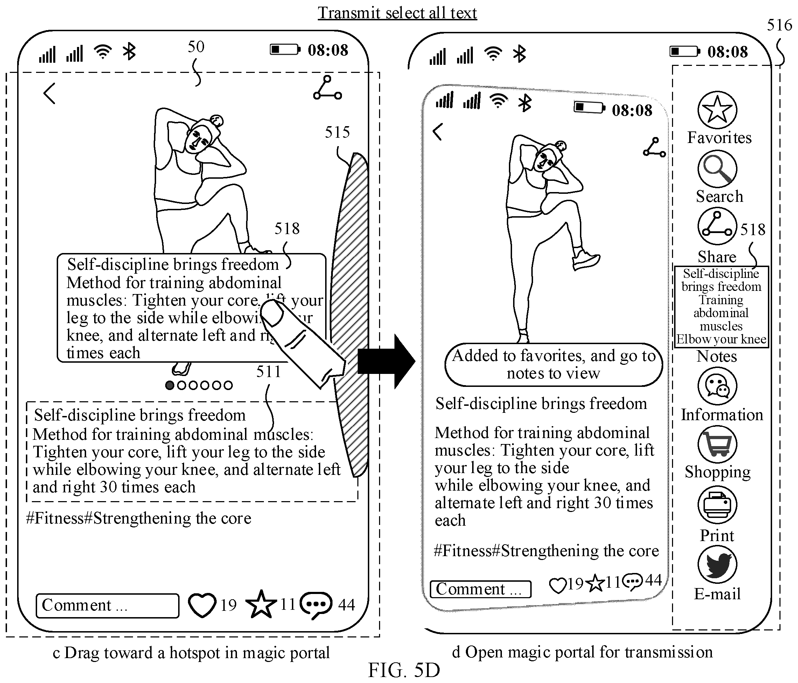

**Referring to** **FIG. 5D, FIG. 5D** **is a schematic diagram of another set of operation interfaces for transmission of select-all texts according to an embodiment of this application.**

c and d in FIG. 5D show that a panel 518 is dragged to a target area in a magic portal and released for transmission of all texts. The c and d in FIG. 5D are similar to the foregoing g and h in FIG. 5B(3) and FIG. 5B(4). A difference is that dragged and shared content is different. All texts in the panel 518 are dragged and shared herein, and the foregoing dragged and shared content is equivalent to part of the content in the panel 518. For other similar parts, reference may be made to the foregoing descriptions of g and h in FIG. 5B(3) and FIG. 5B(4), and details are not described herein.

In an implementable manner, after an electronic device displays the panel 518 shown in b in FIG. 5C and before an operation of dragging the panel 518 shown in c in FIG. 5D is detected, a user may directly start to drag the panel 518 without releasing the hand after triggering display of the panel 518 through touching and holding of a blank of the panel 512, or the user may release the hand after triggering the display of the panel 518 through touching and holding of the blank of the panel 512, and start to drag the panel 518 within 3s after releasing the hand. This is not limited in this embodiment of this application. Optionally, in addition to 3s, a duration for which the panel 518 remains to be displayed may further be another duration. This is not limited in this embodiment of this application.

### Another content sharing manner

In the foregoing FIG. 5B(1), FIG. 5B(2), FIG. 5B(3), FIG. 5B(4), and FIG. 5D, only the "smart flow service" is used as an example to introduce an operation method for transmitting a selected text. In addition, an electronic device may further transmit the selected text through a "cross-device transmission service", a "split-screen transmission service", or the like. Operation methods corresponding to the latter two manners are similar to the operation method shown in FIG. 5B(1), FIG. 5B(2), FIG. 5B(3), and FIG. 5B(4) described above. A difference is that a panel 514 corresponding to selected content needs to be dragged to a target area different from the foregoing light band 515 and released, and shared target objects are also different. Specifically, the "cross-device transmission service" is used as an example. The target area may further be an edge area of a local electronic device (the edge area is specifically an area where a neighboring device is close to the local device), and a target object is a neighboring device for collaborative processing. The "split-screen transmission service" is used as an example. A target area may be another split-screen area of an electronic device, and a target object is an object in the another split-screen area.

In this embodiment of this application, a user-defined name involved in the foregoing text content processing manner 3 may further be referred to as another name. Details are as follows. An application providing the interface 50 may further be referred to as a first application, and a text 511 may further be referred to as a first text.

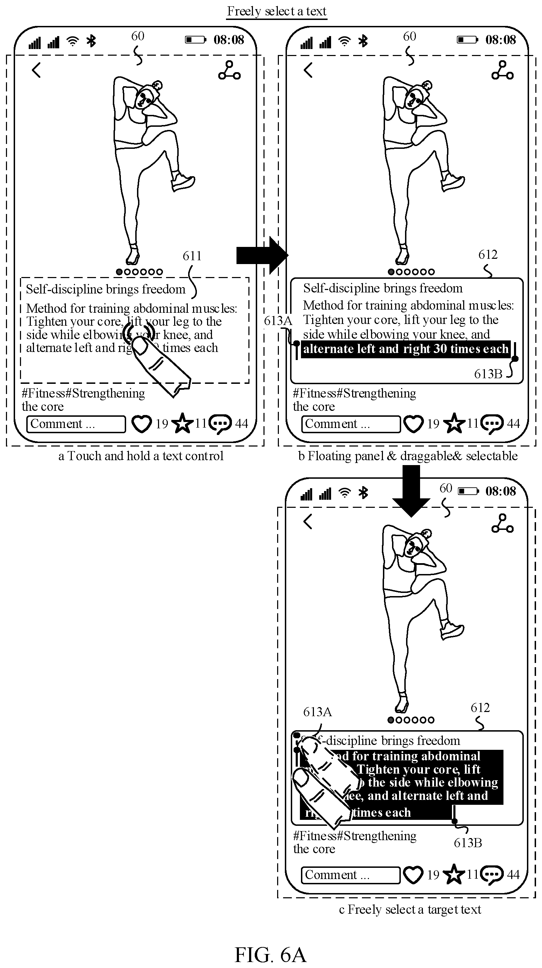

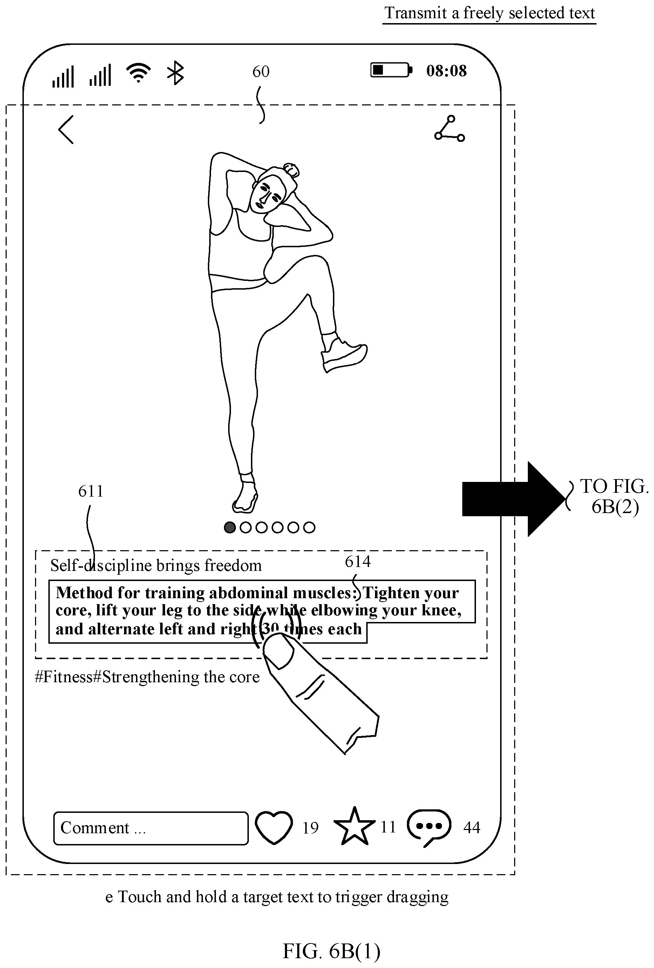

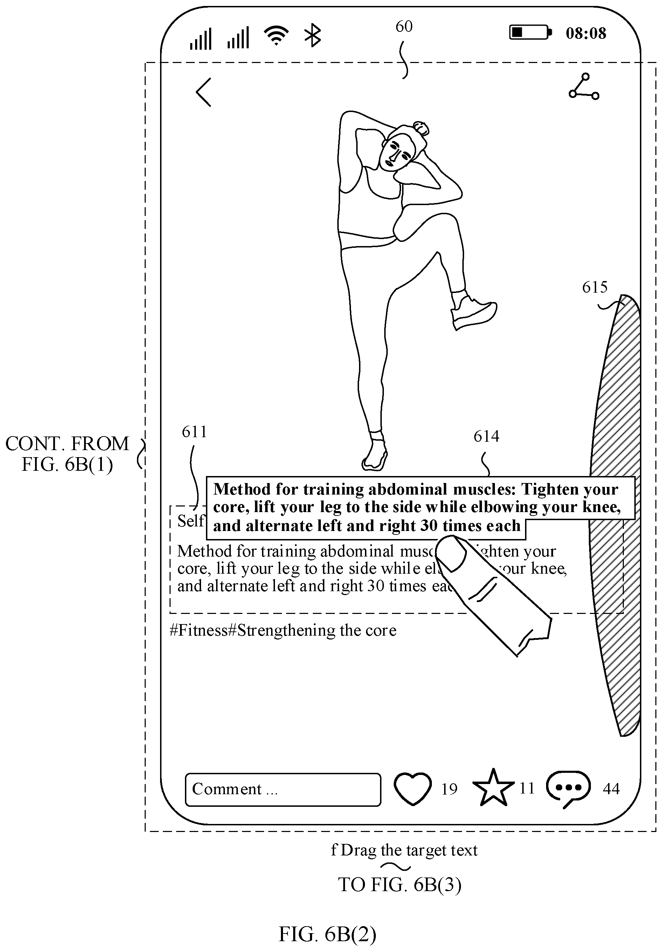

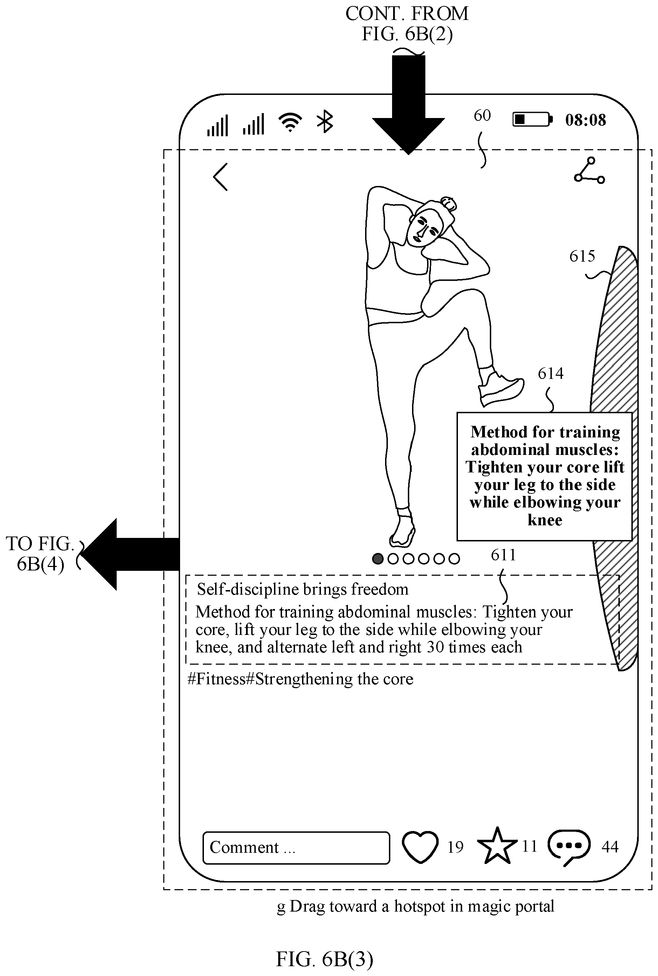

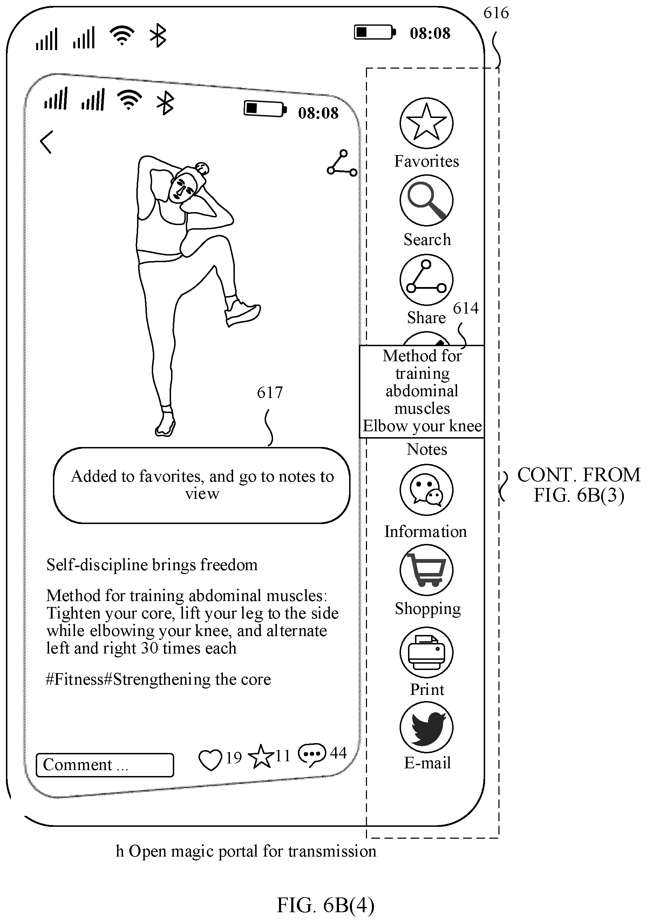

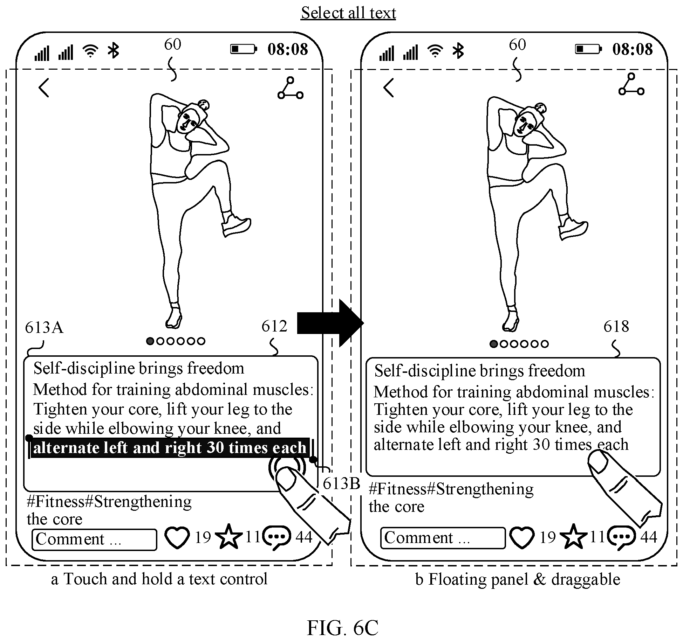

**4.** **FIG. 6A to FIG. 6D** **show operation interfaces involved through a fourth content processing method.**
(1) In the text content processing method 4, for a floating panel including part of a selected text, the user may perform an editing operation on the panel, to further freely select a text through the panel, and then drag the freely selected text to the target area and share the text to the target object. For details, reference is made to the following descriptions of FIG. 6A to FIG. 6B(1), FIG. 6B(2), FIG. 6B(3), and FIG. 6B(4).
(2) In the text content processing method 4, for the floating panel including all selected texts, the user may further drag the panel to a target area by touching and holding a blank of the panel and share the panel to the target object. For details, reference is made to the following descriptions of FIG. 6C to FIG. 6D.

**Referring to** **FIG. 6A, FIG. 6A** **is a schematic diagram of another set of operation interfaces for freely selected texts according to an embodiment of this application.**

a in FIG. 6A shows an interface 60 on which an electronic device displays an application. Specifically, the interface 60 includes a text 611. The text 611 may be displayed through a text control provided by the application. The interface 60 of the application may be specifically an interface provided by a system-level application or a third-party application. This is not limited in this embodiment of this application. If the electronic device detects a touch and hold operation performed on a text 611, the electronic device displays a panel in response to the touch and hold operation. For details, reference is made to b in FIG. 6A.

b in FIG. 6A shows a panel 612 displayed by the electronic device. Specifically, in response to a touch and hold operation performed on the text 611, the electronic device displays the panel 612 on an upper layer of the interface 50. The panel 612 includes the text 611, a cursor 613A, and a cursor 613B. A text between the cursor 613A and the cursor 613B is a selected text. The selected text between the cursor 613A and the cursor 613B may default to the text corresponding to a position where the user performs the touch and hold operation. In addition, a process of displaying the panel 612 brings floating visual experience to the user. In other words, the panel 612 is equivalent to an interface element in a suspended state. In some implementations, the panel 612 may further be implemented as a text control including the text 611, or an image control such as a preview or a thumbnail including the text 611. In some implementations, after the panel 612 is displayed, if it is detected that the user ends the touch and hold operation (that is, the user releases a hand), the panel 612 may disappear after being continuously displayed for a preset duration (for example, 3s). If an operation of dragging the panel 612 by the user not releasing the hand is detected, or an operation of dragging the panel 612 within a preset duration (for example, 3s) after releasing the hand is detected, the panel 612 is to move a display area with a dragging trajectory of the user.

c in FIG. 6A shows an operation interface displayed by the electronic device when freely selecting a text. Specifically, the electronic device may adjust a selected state of text for a text 611 in the panel 612 based on a detected operation of sliding a cursor 613A and/or 613B in the panel 612. A text in a selected state is a target text described in this application. In some implementations, in addition to adjusting the selected target text by sliding the cursor 613A and the cursor 613B, the user may further perform another editing operation such as an operation such as deletion or writing. This is not limited in this embodiment of this application.

**Referring to** FIG. 6B(1), FIG. 6B(2), FIG. 6B(3), and FIG. 6B(4), FIG. 6B(1), FIG. 6B(2), FIG. 6B(3), and FIG. 6B(4) **are schematic diagrams of other sets of operation interfaces for transmission of freely selected texts according to an embodiment of this application.**

e in FIG. 6B(1) shows an operation interface displayed by an electronic device for triggering dragging of a target text. Specifically, when a touch and hold operation performed on a target text is detected, the electronic device may display a panel 614 in a suspended state corresponding to the target text. In a process of displaying the panel 614, display of a panel 612 is stopped, but display of an original text 611 in an interface 60 is not stopped, thereby bringing a visual effect to a user that a text other than the target text in the panel 612 sinks from the panel 612. The panel 614 may be located at a position of a touch point on a display screen when a user performs a touch and hold operation. The panel 614 includes the target text. Optionally, when the target text has a lot of content, a part of the target text may be displayed in the panel 614, for example, a first sentence of the target text or an abstract of the target text. In some implementations, the panel 614 may further be implemented as a text control of the target text, or an image control such as a preview or a thumbnail of the target text.

f and g in FIG. 6B(2) and FIG. 6B(3) show an operation interface displayed by an electronic device for dragging a target text to a hotspot in a magic portal. Specifically, after the electronic device displays a panel 614 in a suspended state, the electronic device may display the light band 615 as a user drags the panel 614. The light band 615 is used to guide the user to drag the panel 614 to a hotspot in a magic portal to trigger opening of the magic portal (that is, a smart flow service is enabled). The light band 615 may be an interface element with attributes such as color, shadow, gradient, and graphic filling (for example, grid filling or slash filling). In some implementations, the light band 615 may further present a dynamic effect, for example, a change in a display area or a color. For example, the light band may change a display area based on a dragging area of the panel 614, bringing an operation experience of absorbing the suspended panel 614 for the user. In some implementations, in a process of dragging a panel 614, a display form of the panel 614 is switched, including switching of a display size and/or display content. For example, when the panel 614 is dragged in a direction from an initial position toward a light band 615, a size of the panel 614 is reduced from a size shown in f in FIG. 6B(2) to a size shown in g in FIG. 6B(3), and content of an included text is also reduced from content shown in f in FIG. 6B(2) to content shown in g in FIG. 6B(3). A change in the display form of the panel 614 in a dragging process is not specifically limited in this embodiment of this application. In some other implementations, the light band 615 may further be a transparent area. In this way, an interface element displayed on a lower layer of the light band 615 may not be occluded.

h in FIG. 6B(4) shows an operation interface displayed by an electronic device for opening a magic portal for transmission. Specifically, when the electronic device detects that a panel 614 is dragged to a light band 615, the electronic device is triggered to open a magic portal. A menu bar 616 including icons of one or more candidate applications is displayed in the opened magic portal. The menu bar 616 may include a favorites icon, a search icon, a share icon, a note icon, an information icon, a shopping icon, a print icon, an email icon, and the like. In addition, when the electronic device detects that a user continues to drag the panel 614 to an icon (for example, a note application icon, that is, a target area) of any candidate application in the menu bar 616 and releases the panel, the electronic device may confirm that the note application is a target object. Subsequently, the electronic device may transmit a text (that is, a target text) corresponding to the panel 614 to the note application, and may further output corresponding prompt information 617. Outputting of the prompt information 617 is not limited. In some other implementations, the electronic device may further display a window provided by the target object, or directly jump to an interface provided by the target object.

Still referring to h in FIG. 6B(4), a favorites application corresponding to the favorites icon in the menu bar 616 may be a system application that provides a global system favorites function. A note application corresponding to the note icon may be a system application, or may be a third-party application, which may provide functions such as recording and favorites in the application. A candidate application is an application screened by the electronic device from all installed applications that supports receiving of to-be-transmitted data. The electronic device may determine the candidate application based on an information type, semantic information, and the like of the to-be-transmitted data. The candidate application may include a global application (such as a favorites application, a search application, a share application, and an email application) that supports receiving of any type of data, or may include an application that supports receiving of only some types of data (such as a picture editing application that supports receiving of only pictures, and a navigation application that supports receiving of only a text). Different to-be-transmitted data may correspond to different menu bars.

Still referring to h in FIG. 6B(4), when an electronic device displays a menu bar 616 that includes an icon of a candidate application, the electronic device may adjust an original foreground user interface to a right perspective style, which vividly forms an "door opening" animation effect with the foregoing menu bar 616. The foreground user interface may be an interface formed by other content displayed on the display screen excluding a status bar, or may be all content displayed on the display screen including the status bar. This is not limited in this embodiment of this application.

Still referring to h in FIG. 6B(4), when an electronic device displays a menu bar 416 that includes an icon of a candidate application, the electronic device may adjust an original foreground user interface to a right perspective style, which vividly forms an "door opening" animation effect with the foregoing menu bar 416. The foreground user interface may be an interface formed by other content displayed on the display screen excluding a status bar, or may be all content displayed on the display screen including the status bar. This is not limited in this embodiment of this application.

**Referring to** **FIG. 6C, FIG. 6C** **is a schematic diagram of another set of operation interfaces for select-all texts according to an embodiment of this application.**

a and b in FIG. 6C show that an electronic device is triggered to display a panel 618 through a touch and hold operation performed on a blank in a panel 612. The panel 618 includes all content in a text 611. In some implementations, the panel 618 shown in b in FIG. 6C and the panel 612 shown in a in FIG. 6C may be a same panel. A difference is that no text in the panel 618 is in a selected state and part of the text in the panel 612 is in a selected state. In some other implementations, the panel 618 shown in b in FIG. 6C and the panel 612 shown in a in FIG. 6C are not the same panel. When the panel 618 is displayed, the panel 612 disappears. In addition, a in FIG. 6C is the same as the foregoing b in FIG. 6A. For details, reference may be made to the descriptions of the foregoing a in FIG. 6A, and details are not described herein.

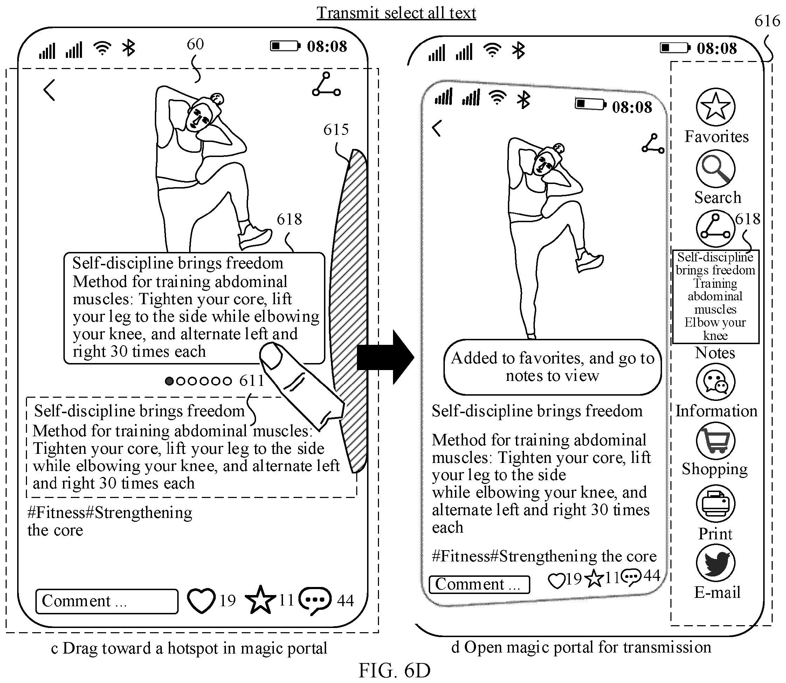

**Referring to** **FIG. 6D, FIG. 6D** **is a schematic diagram of another set of operation interfaces for transmission of select-all texts according to an embodiment of this application.**

c and d in FIG. 6D show that a panel 618 is dragged to a target area in a magic portal and released for transmission of all texts. The c and d in FIG. 6D are similar to the foregoing g and h in FIG. 6B(3) and FIG. 6B(4). A difference is that dragged and shared content is different. All texts in the panel 618 are dragged and shared herein, and the foregoing dragged and shared content is equivalent to part of the content in the panel 618. For other similar parts, reference may be made to the foregoing descriptions of g and h in FIG. 6B(3) and FIG. 6B(4), and details are not described herein.

In an implementable manner, after an electronic device displays the panel 618 shown in b in FIG. 6C and before an operation of dragging the panel 618 shown in c in FIG. 6D is detected, a user may directly start to drag the panel 618 without releasing the hand after triggering display of the panel 618 through touching and holding of a blank of the panel 612, or the user may release the hand after triggering the display of the panel 618 through touching and holding of the blank of the panel 612, and start to drag the panel 618 within 3s after releasing the hand. This is not limited in this embodiment of this application. Optionally, in addition to 3s, a duration for which the panel 612 remains to be displayed may further be another duration. This is not limited in this embodiment of this application.

### Another content sharing manner

In the foregoing FIG. 6B(1), FIG. 6B(2), FIG. 6B(3), FIG. 6B(4), and FIG. 6D, only the "smart flow service" is used as an example to introduce an operation method for transmitting a selected text. In addition, an electronic device may further transmit the selected text through a "cross-device transmission service", a "split-screen transmission service", or the like. Operation methods corresponding to the latter two manners are similar to the operation method shown in FIG. 6B(1), FIG. 6B(2), FIG. 6B(3), and FIG. 6B(4) described above. A difference is that a panel 614 corresponding to selected content needs to be dragged to a target area different from the foregoing light band 615 and released, and shared target objects are also different. Specifically, the "cross-device transmission service" is used as an example. The target area may further be an edge area of a local electronic device (the edge area is specifically an area where a neighboring device is close to the local device), and a target object is a neighboring device for collaborative processing. The "split-screen transmission service" is used as an example. A target area may be another split-screen area of an electronic device, and a target object is an object in the another split-screen area.

In this embodiment of this application, a user-defined name involved in the foregoing text content processing manner 4 may further be referred to as another name. Details are as follows. An application providing the interface 60 may further be referred to as a first application, and a text 611 may further be referred to as a first text.

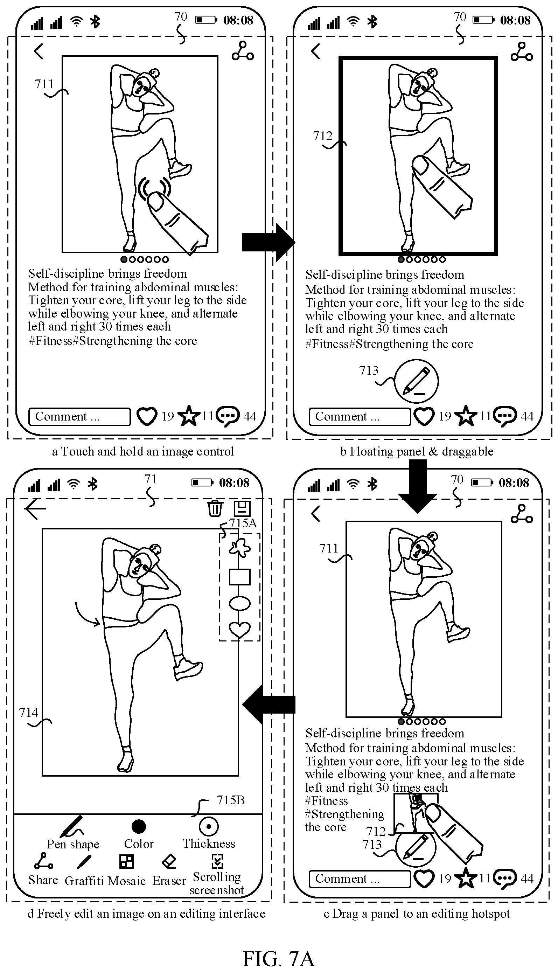

The content processing method provided in this application is described above only through the text content as an example. Next, a processing method for image content is described in detail. Similar to a method used for processing of text content, for image content, a user may also trigger, by touching and holding an image, display of a panel in a suspended state that includes the image, and then drag the panel to a target area and share the panel to a target object. For details, reference is made to the following detailed descriptions of FIG. 7A to FIG. 7D.

**Referring to** **FIG. 7A, FIG. 7A** **is a schematic diagram of a set of operation interfaces for free editing of an image according to an embodiment of this application.**

a in FIG. 7A shows an interface 70 on which an electronic device displays an application. Specifically, the interface 70 includes an image 711. The image 711 may be displayed through an image control provided by the application. The interface 70 of the application may be specifically an interface provided by a system-level application or a third-party application. This is not limited in this embodiment of this application. If the electronic device detects a touch and hold operation performed on the image 711, the electronic device displays a panel in response to the touch and hold operation. For details, reference is made to b in FIG. 7A.

b in FIG. 7A shows a panel 712 displayed by the electronic device. Specifically, in response to the touch and hold operation performed on the image 711, the electronic device displays a panel 712 and an icon 713 on an upper layer of the interface 30. The panel 712 includes the image 711, and a process of displaying the panel 712 brings floating visual experience to the user. In other words, the panel 712 is equivalent to an interface element in a suspended state. In some implementations, the panel 712 may further be implemented as an image control including the image 711. In some implementations, after the panel 712 is displayed, if it is detected that the user ends the touch and hold operation (that is, the user releases a hand), the panel 712 may disappear after being continuously displayed for a preset duration (for example, 3s). If an operation of dragging the panel 712 by the user not releasing the hand is detected, or an operation of dragging the panel 712 within a preset duration (for example, 3s) after releasing the hand is detected, the panel 712 is to move a display area with a dragging trajectory of the user.

c in FIG. 7A shows an operation interface when an electronic device displays a dragging panel 712. Specifically, when an operation of dragging a panel 712 is detected, the electronic device further displays an icon 713. The icon 713 is used to instruct the user to continually drag the panel 712 to a hotspot of the icon 713 to edit the image 711.

d in FIG. 7A shows an editing interface 71 displayed by an electronic device. Specifically, when an operation of dragging the panel 712 to the hotspot of the icon 713 is detected, the electronic device displays the editing interface 71. The editing interface 71 includes an editing panel 714 and a plurality of editing controls, for example, a shape capture control in a toolbar 715A, and a pen control, a color control, and a thickness control in the toolbar 715B. The user may freely edit the image by using various tools in the toolbar 715A and the toolbar 715B. Before the image in the editing panel 714 is edited, the image is the same as the image 711. After the image in the editing panel 714 is edited, the image is a target image obtained after the image 711 is edited. d in FIG. 7A is merely used to illustrate the editing operation of graffiti arrows as an example. The editing operation of the image is not limited in this application.

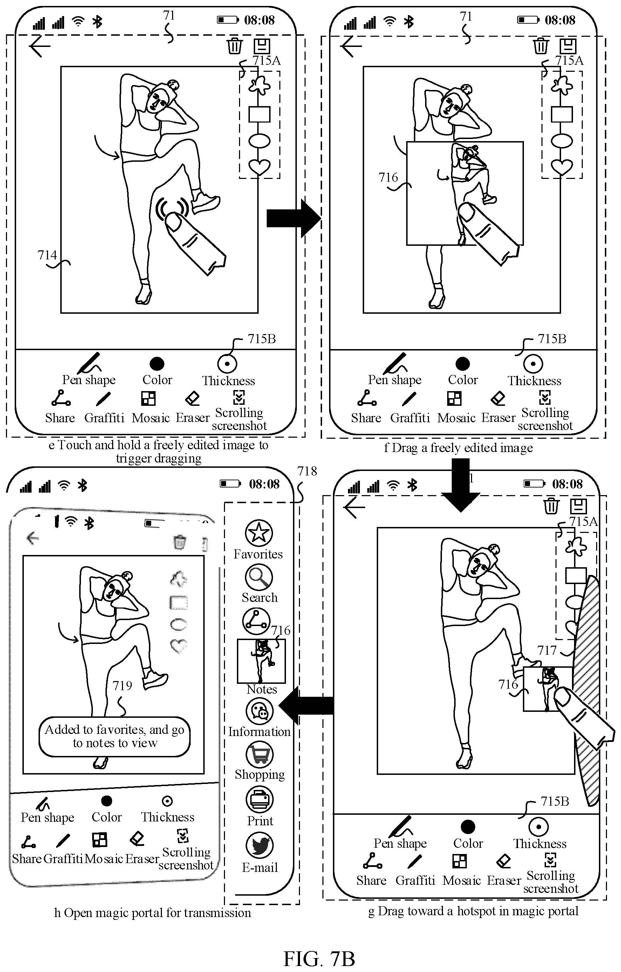

**Referring to** **FIG. 7B, FIG. 7B** **is a schematic diagram of a set of operation interfaces for transmission of a freely edited image according to an embodiment of this application.**

e in FIG. 7B shows an operation interface displayed by an electronic device for triggering dragging of a target image. Specifically, when the touch and hold operation performed on the target image (that is, the freely edited image in the panel 714) is detected, the electronic device may display a panel 716 in a suspended state corresponding to the target image. The panel 716 may be located at a position of a touch point on a display screen when a user performs a touch and hold operation. The panel 716 includes a target image. Optionally, when the target image is relatively large, the panel 716 may display a part of the target image, for example, a central area of the target image. In some implementations, the panel 716 may further be implemented as an image control of the target image.

f and g in FIG. 7B show operation interfaces displayed by the electronic device when dragging the panel 716. Specifically, after the electronic device displays a panel 716 in a suspended state, the electronic device may display the light band 717 as a user drags the panel 716. The light band 717 is used to guide the user to drag the panel 716 to a hotspot in a magic portal to trigger opening of the magic portal (that is, a smart flow service is enabled). The light band 717 may be an interface element with attributes such as color, shadow, gradient, and graphic filling (for example, grid filling or slash filling). In some implementations, the light band 717 may further present a dynamic effect, for example, a change in a display area or a color. For example, the light band may change a display area based on a dragging area of the panel 716, bringing an operation experience of absorbing the suspended panel 716 for the user. In some other implementations, the light band 717 may further be a transparent area. In this way, an interface element displayed on a lower layer of the light band 717 may not be occluded.

h in FIG. 7B shows an operation interface displayed by an electronic device for opening a magic portal for transmission. Specifically, when the electronic device detects that a panel 716 is dragged to a light band 717, the electronic device is triggered to open a magic portal. A menu bar 718 including icons of one or more candidate applications is displayed in the opened magic portal. The menu bar 718 may include a favorites icon, a search icon, a share icon, a note icon, an information icon, a shopping icon, a print icon, an email icon, and the like. In addition, when the electronic device detects that a user continues to drag the panel 716 to an icon (for example, a note application icon, that is, a target area) of any candidate application in the menu bar 718 and releases the panel, the electronic device may confirm that the note application is a target object. Subsequently, the electronic device may transmit a target image corresponding to the panel 716 to the note application, and may further output corresponding prompt information 719. Outputting of the prompt information 719 is not limited. In some other implementations, the electronic device may further display a window provided by the target object, or directly jump to an interface provided by the target object.

Still referring to e, f, g, and h in FIG. 7B, in a process of dragging a panel 716, a display form of the panel 716 is switched, including switching of a display size and/or display content. For example, when the panel 716 is dragged in a direction from an initial position to the light band 717, the size of the panel 716 is reduced from a size shown in e in FIG. 7B to a size shown in f in FIG. 7B. For another example, when the panel 716 is dragged to be close to a light band area, the size of the panel 716 may be further reduced from f in FIG. 7B to a size shown in g in FIG. 7B. A change in a display form of the panel 716 in a dragging process is not specifically limited in this embodiment of this application.

Still referring to h in FIG. 7B, when an electronic device displays a menu bar 718 that includes an icon of a candidate application, the electronic device may adjust an original foreground user interface to a right perspective style, which vividly forms an "door opening" animation effect with the foregoing menu bar 718. The foreground user interface may be an interface formed by other content displayed on the display screen excluding a status bar, or may be all content displayed on the display screen including the status bar. This is not limited in this embodiment of this application.

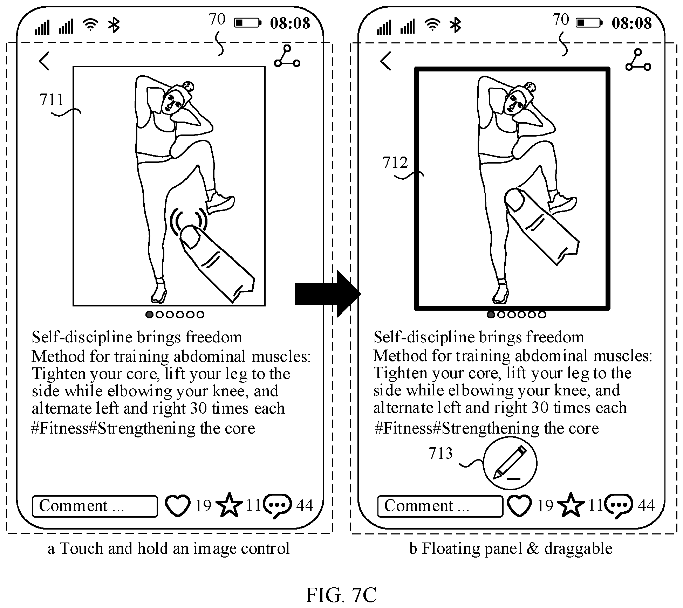

**Referring to** **FIG. 7C, FIG. 7C** **is a schematic diagram of a set of operation interfaces for selected images according to an embodiment of this application.**

a and b in FIG. 7C show that through a touch and hold operation performed on an image 711, an electronic device is triggered to display a panel 712. The panel 712 includes the image 711. a and b in FIG. 7C are the same as the foregoing a and b in FIG. 7A. For details, reference may be made to the descriptions of the foregoing a and b in FIG. 7A, and details are not described herein.

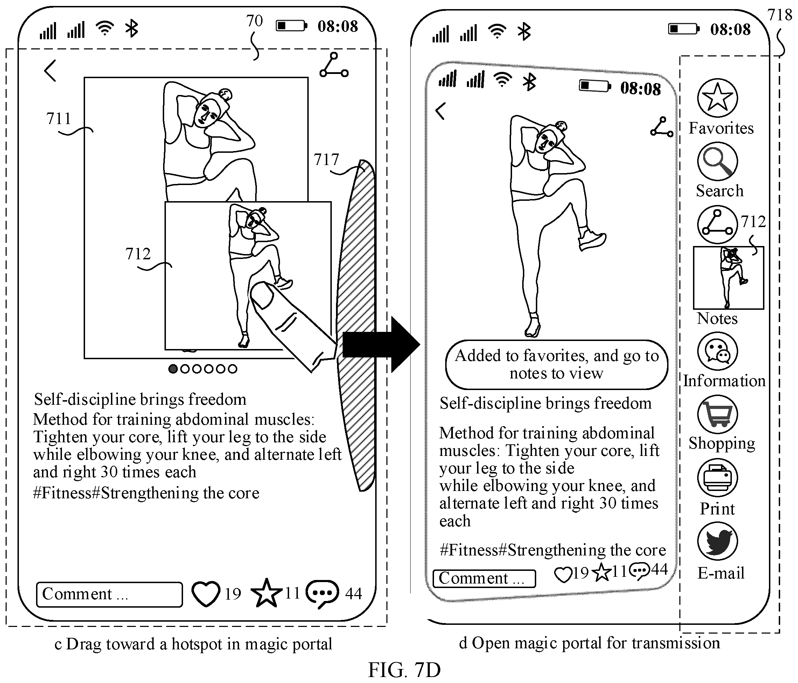

**Referring to** **FIG. 7D, FIG. 7D** **is a schematic diagram of a set of operation interfaces for direct transmission of a selected image according to an embodiment of this application.**

c and d in FIG. 7D show that a panel 712 is dragged to a target area in a magic portal and released for transmission of an image 711. The c and d in FIG. 7D are similar to the foregoing g and h in FIG. 7B. A difference is that dragged and shared content is different. The image 711 in the panel 712 are dragged and shared herein, and the foregoing dragged and shared content is a target image in the panel 716. For other similar parts, reference may be made to the foregoing descriptions of g and h in FIG. 7B, and details are not described herein.

In an implementable manner, after an electronic device displays the panel 712 shown in b in FIG. 7C and before an operation of dragging the panel 712 shown in c in FIG. 7D is detected, a user may directly start to drag the panel 712 without releasing the hand after triggering display of the panel 712 through touching and holding of the image 711, or the user may release the hand after triggering the display of the panel 712 through touching and holding of the image 711, and start to drag the panel 712 within 3s after releasing the hand. This is not limited in this embodiment of this application. Optionally, in addition to 3s, a duration for which the panel 712 remains to be displayed may further be another duration. This is not limited in this embodiment of this application.

Based on the above, it may be learned that after the method provided in this application is implemented, a more convenient and free content selection method and a more convenient and abundant content sharing method may be provided for a user.

Based on the foregoing descriptions of UI embodiments involved in the content processing method provided in this application, a form of the electronic device involved and a software and hardware architecture thereof are described below.

The electronic device may be a portable terminal device equipped with iOS^{®}, Android^{®}, Microsoft^{®}, or another operating system, for example, a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an on-board device, a smart household device, and/or a smart city device.

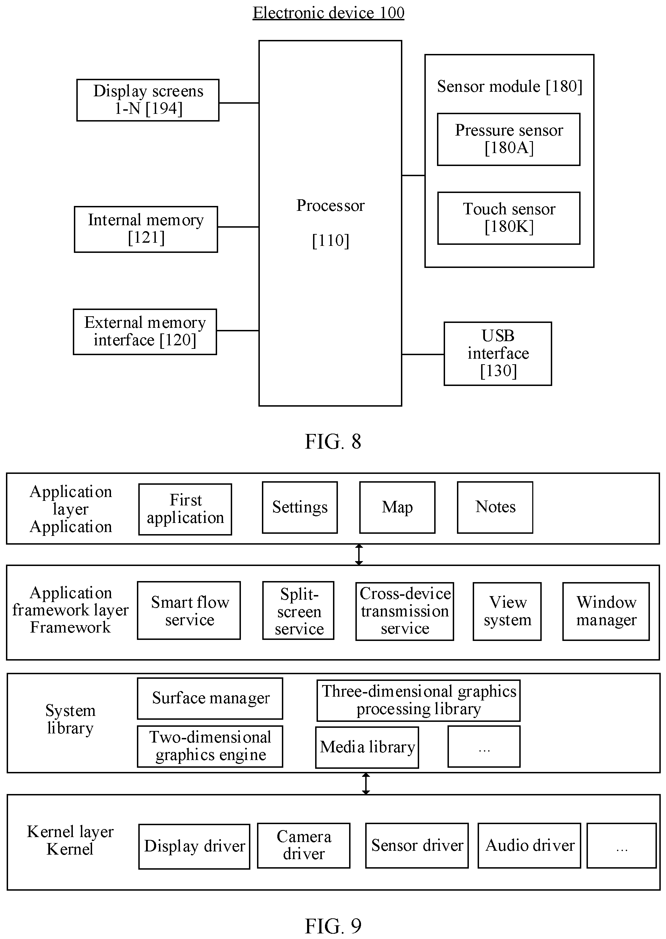

FIG. 8 shows a schematic structural diagram of an electronic device 100.

The electronic device 100 may include a processor 110, an external memory interface 120, an internal memory 121, a universal serial bus (universal serial bus, USB) interface 130, a sensor module 180, a display screen 194, and the like. The sensor module 180 may include a pressure sensor 180A, a touch sensor 180K, and the like.

It may be understood that an example structure in this embodiment of this application does not constitute a specific limitation on the electronic device 100. In some other embodiments of this application, the electronic device 100 may include more or fewer components than those shown in the figure, or some merged components, or some split components, or different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 100. The controller may generate an operation control signal based on an instruction operation code and a timing signal, and control obtaining and execution of an instruction.

A memory may be further arranged in the processor 110, which is configured to store an instruction and data. In some embodiments, the memory in the processor 110 is a cache memory. The memory may store the instruction or data that has just been used or recycled by the processor 110. If the processor 110 needs to use the instruction or the data again, the processor may directly invoke the instruction or the data from the memory. Repeated access is avoided, and waiting time of the processor 110 is reduced, thereby improving system efficiency.

In embodiments of this application, the processor 110 is configured to cooperate with the display screen 194, the touch sensor 180K, and the like, to implement the foregoing content processing method.

In some embodiments, the processor 110 may include one or more interfaces. The interface may include the universal serial bus (universal serial bus, USB) interface, and the like. The USB interface 130 is an interface that complies with the USB standard specification, and may be specifically a Mini USB interface, a Micro USB interface, a USB Type C interface, or the like. The USB interface 130 may be configured to connect to a charger to charge the electronic device 100, or may be configured to perform data transmission between the electronic device 100 and the peripheral device. The interface may alternatively be configured to connect to a headset to play audio through the headset. The interface may further be configured to connect to another electronic device such as an AR device.

It may be understood that a schematic interface connection relationship between the modules in embodiments of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The electronic device 100 implements a display function through the GPU, the display screen 194, the application processor, and the like. The GPU is a microprocessor for image processing and connects the display screen 194 to the application processor. The GPU is configured to perform mathematical and geometric computations for graphics rendering. The processor 110 may include one or more GPUs, and is configured to execute program instructions to generate or change display information.

The display screen 194 is configured to display an image, a video, and the like. The display screen 194 includes a display panel. The display panel may be a liquid crystal display (liquid crystal display, LCD). The display screen panel may further be manufactured through an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a miniled, a microLed, a micro-oled, a quantum dot light emitting diode (quantum dot light emitting diodes, QLED), or the like. In some embodiments, the electronic device 100 may include 1 or N display screens 194. N is a positive integer greater than 1.

In embodiments of this application, the electronic device may control, based on a detected operation, the display screen 194 to output corresponding feedback information, which may specifically output an interface including but not limited to the interfaces shown in FIG. 1A to FIG. 7D.

The internal memory 121 may include one or more random access memories (random access memory, RAM) and one or more non-volatile memories (non-volatile memory, NVM).

The external memory interface 120 may be configured to connect to an external non-volatile memory, to expand storage capacity of the electronic device 100. The external non-volatile memory communicates with the processor 110 through the external memory interface 120, to implement a data storage function. For example, a file such as music or a video is stored in the external non-volatile memory.

The pressure sensor 180A is configured to sense a pressure signal, and may convert the pressure signal into an electrical signal. In some embodiments, the pressure sensor 180A may be arranged in the display screen 194. Many types of pressure sensors 180A such as a resistive pressure sensor, an inductance pressure sensor, and a capacitive pressure sensor are arranged. The capacitive pressure sensor may be a parallel plate including at least two conductive materials. When a force is applied to the pressure sensor 180A, a capacitance between electrodes changes. The electronic device 100 determines intensity of a pressure based on the change in the capacitance. When a touch operation is performed on the display screen 194, the electronic device 100 detects a touch operation intensity through the pressure sensor 180A. The electronic device 100 may also calculate a touch position based on a detection signal of the pressure sensor 180A. In some embodiments, touch operations that are performed on a same touch position but have different touch operation intensities may correspond to different operation instructions. For example, when a touch operation whose touch operation intensity is less than a first pressure threshold is performed on a short message application icon, an instruction of checking a short message is executed. When a touch operation whose touch operation intensity is greater than or equal to the first pressure threshold is performed on the short message application icon, an instruction of creating a new short message is executed.

In embodiments of this application, the pressure sensor 180A may be configured to detect various touch and pressing operations involved in FIG. 1A to FIG. 7D.

The touch sensor 180K is also referred to as a "touch panel". The touch sensor 180K may be arranged on the display screen 194. The touch sensor 180K and the display screen 194 form a touchscreen, which is also referred to as a "touch screen". The touch sensor 180K is configured to detect a touch operation performed on or near the touch sensor. The touch sensor may transfer the detected touch operation to the application processor to determine a touch event type. A visual output related to the touch operation may be provided through the display screen 194. In some other embodiments, the touch sensor 180K may alternatively be arranged on a surface of the electronic device 100 at a position different from that of the display screen 194.

In embodiments of this application, the touch sensor 180K is configured to detect various touch and pressing operations involved in the foregoing FIG. 1A to FIG. 7D.

A software system of the electronic device 100 may use a layered architecture, an event-driven architecture, a microkernel architecture, a microservice architecture, or a cloud architecture. In this embodiment of this application, the software structure of the electronic device 100 is described through examples by using an Android system with a layered architecture as an example.

FIG. 9 is a block diagram of a software structure of an electronic device 100 according to an embodiment of this application.

In the layered architecture, software is divided into several layers, and each layer has a clear role and division of labor. The layers communicate with each other through a software interface. In some embodiments, the Android system is divided into four layers, which are respectively an application layer, an application framework layer, an Android runtime (Android runtime) and system library, and a kernel layer from top to bottom.

The application layer may include a series of application packages.

As shown in FIG. 9, the application packages may include, but not limited to, applications such as a first application, settings, map, and notes.

The first application is a third-party application or a system application installed in the electronic device. In embodiments of this application, the system application is an application for implementing a specific function that is directly provided by an operating system of the electronic device 100. The third-party application is an application provided by another developer and obtained by the electronic device 100 through the Internet for implementing the specific function. The first application may display the user interface described in the foregoing UI implementation.

The application framework layer provides an application programming interface (application programming interface, API) and a programming framework for applications at the application layer. The application framework layer includes some predefined functions.

As shown in FIG. 9, the application framework layer may include a window manager, a view system, a smart flow service, a split-screen service, a cross-device transmission service, and the like.

The view system includes visual controls, for example, a control for displaying a text and a control for displaying an image. The view system may be configured to construct an application. A display interface may include one or more views. For example, a display interface including a short message notification icon may include a view for displaying a text and a view for displaying a picture.

In embodiments of this application, the view system is configured to construct the first application, so as to display the interface provided by the first application described above. The view system may further be configured to construct and display various panels and the like shown in FIG. 1A to FIG. 7D. These panels are provided by a second application installed in the electronic device other than the first application.

A "smart flow service" is a system service or a system function provided by an electronic device in this application, and may support the electronic device in convenient transmission of content from one application to another application. Specifically, the "smart flow service" supports the electronic device in display, on the display screen, of icons of one or more applications that may be configured to receive the foregoing to-be-transmitted content, and the to-be-transmitted content is shared to a corresponding application after an operation in which a panel/element corresponding to the to-be-transmitted content is dragged to an area of any application icon and released is detected.

The "split-screen transmission service" may further be referred to as a "multi-screen collaboration service", and may specifically provide a service of sharing content in a current sub-screen to another sub-screen for collaborative processing.

The "cross-device transmission service" may further be referred to as a "multi-device collaboration service", and may specifically provide a function of sharing content in a current device to another device for collaborative processing.

Optionally, the content selection described above may be specifically provided by the "smart flow service", the "split-screen transmission service", or the "cross-device transmission service", or may be provided by a separate functional module. The separate functional module may work in cooperation with the foregoing three services to provide a complete content processing method for a user. For details of the content processing method, reference may be made to the descriptions of the foregoing UI embodiments, and the details are not described herein.

The system library may include a plurality of functional modules, for example, a surface manager (surface manager), a media library (media libraries), a three-dimensional graphics processing library (for example, openGL ES), and a two-dimensional (2D) graphics engine (for example, an SGL).

The kernel layer is a layer between hardware and software. The kernel layer includes at least a display driver, a camera driver, an audio driver, and a sensor driver.

It should be understood that the steps in the foregoing method embodiments provided in this application may be completed through an integrated logic circuit of hardware in the processor or an instruction in a form of software. The steps of the method disclosed in combination with embodiments of this application may be directly performed by a hardware processor, or may be performed through a combination of hardware and software modules in the processor.

This application further provides a chip system. The chip system includes at least one processor configured to implement functions involved in the method performed by the electronic device in any one of the foregoing embodiments.

This application further provides a computer program product. The computer program product includes a computer program (which may also be referred to as code or an instruction). When the computer program is run, a computer is enabled to perform the method performed by the electronic device in any one of the foregoing embodiments.

This application further provides a computer-readable storage medium. The computer-readable storage medium has a computer program (which may also be referred to as code or an instruction) stored therein. The computer program, when run, causes a computer to perform the method performed by the electronic device in any one of the foregoing embodiments.

Various implementations of this application may be randomly combined to achieve different technical effects.

All or some of the foregoing embodiments may be implemented through software, hardware, firmware, or any combination thereof. During implementation through software, all or some of embodiments may be implemented in a form of a computer program product. The computer program product includes one or more computer instructions. When the computer program instruction is loaded and executed on a computer, some or all processes or functions according to this application are generated. The computer may be a general-purpose computer, a special-purpose computer, a computer network, or another programmable apparatus. The computer instruction may be stored in a computer-readable storage medium, or may be transmitted from a computer-readable storage medium to another computer-readable storage medium. For example, the computer instruction may be transmitted from a website, a computer, a server, or a data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device such as a server or a data center integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

A person of ordinary skill in the art may understand that all or some of the processes in the foregoing method embodiments may be implemented through a computer program instructing relevant hardware. The program may be stored in a computer-readable storage medium. When the program is executed, the processes in the foregoing method embodiments may be included. The foregoing storage medium includes: any medium that can store program code, such as a ROM, a random access memory RAM, a magnetic disk, or an optical disc.

In conclusion, the foregoing descriptions are merely embodiments of the technical solutions of the present invention, and are not intended to limit the protection scope of the present invention. Any modification, equivalent replacement, improvement, and the like made based on the disclosure of the present invention shall fall within the protection scope of the present invention.

## Claims

1. A content processing method, applied to an electronic device, wherein the method comprises:
displaying an interface of a first application, wherein the interface comprises a first text;
displaying a first panel in response to a first operation performed on the first text, wherein the first panel comprises the first text;
displaying a second panel in response to a second operation performed on the first panel, wherein the second panel comprises the first text and a cursor; and
selecting a target text in response to an operation performed on the cursor, wherein the target text is part or all of the first text.

2. The method according to claim 1, wherein the first operation is a touch and hold operation.

3. The method according to claim 1 or 2, wherein the second operation is an operation of dragging to a first area of the interface.

4. The method according to any one of claims 1 to 3, wherein
the displaying a first panel comprises: displaying the first panel on an upper layer of the interface; and
after the displaying a first panel and before the displaying a second panel, the method further comprises: displaying the interface on a lower layer of the first panel.

5. The method according to any one of claims 1 to 4, wherein after the displaying a second panel, the method further comprises: stopping displaying the first panel.

6. The method according to any one of claims 1 to 5, wherein
after the selecting a target text, the method further comprises:
displaying a menu bar in response to a third operation performed on the target text, wherein the menu bar comprises an icon of a second application; and
sharing the target text to the second application in response to a fourth operation performed on the target text.

7. The method according to claim 6, wherein the third operation is an operation of dragging to a second area of the interface.

8. The method according to claim 6 or 7, wherein the fourth operation is an operation of still dragging the target text to an icon of the second application and releasing the target text.

9. The method according to any one of claims 6 to 8, wherein after the third operation, the method further comprises: stopping displaying the second panel.

10. The method according to any one of claims 6 to 9, wherein after the third operation and before the sharing the target text to the second application, the method further comprises:
switching the target text from a first display form to a second display form.

11. The method according to any one of claims 6 to 10, wherein before the displaying a menu bar, the method further comprises: displaying a light band in a third area.

12. The method according to any one of claims 1 to 5, wherein
after the selecting a target text, the method further comprises:
displaying a third panel in response to a fifth operation performed on the second panel, wherein the third panel comprises the first text;
displaying a menu bar in response to a third operation performed on the third panel, wherein the menu bar comprises an icon of a second application; and
sharing all texts in the second panel to the second application in response to a fourth operation performed on the second panel.

13. The method according to claim 12, wherein the fifth operation is an operation of touching and holding a blank area.

14. The method according to claim 12 or 13, wherein the third operation is an operation of dragging to a second area of the interface.

15. The method according to any one of claims 12 to 14, wherein the fourth operation is an operation of still dragging the second panel to an icon of the second application and releasing the second panel.

16. The method according to any one of claims 12 to 15, wherein after the third operation, the method further comprises: stopping displaying the third panel.

17. The method according to any one of claims 12 to 16, wherein after the third operation and before the sharing all texts in the third panel to the second application, the method further comprises:
switching the third panel from a third display form to a fourth display form.

18. The method according to any one of claims 12 to 17, wherein before the displaying a menu bar, the method further comprises: displaying a light band in a fourth area.

19. The method according to claim 3, wherein the first area comprises a first icon, and the first icon is used to prompt a user to perform text editing.

20. The method according to claim 3 or 19, wherein the first area is located below a screen of the electronic device.

21. The method according to any one of claims 1 to 20, wherein the first text is displayed in a non-editable control provided by the first application.

22. The method according to any one of claims 1 to 21, wherein the first panel and the second panel are provided by one of an application, a service, or a component other than the first application.

23. The method according to any one of claims 1 to 22, wherein after the first operation and before the displaying the first panel, the method further comprises: taking a screenshot to obtain the first text.

24. A content processing method, applied to an electronic device, wherein the method comprises:
displaying an interface of a first application, wherein the interface comprises a first text;
displaying a first panel in response to a first operation performed on the first text, wherein the first panel comprises the first text;
displaying a menu bar in response to a third operation performed on the first panel, wherein the menu bar comprises an icon of a second application; and
sharing the first text to the second application in response to a fourth operation performed on the first panel.

25. A content processing method, applied to an electronic device, wherein the method comprises:
displaying an interface of a first application, wherein the interface comprises a first text;
displaying a first panel in response to a first operation performed on the first text, wherein the first panel comprises the first text;
displaying a cursor on the first panel in response to an eleventh operation performed on the first panel; and
selecting a target text in response to an operation performed on the cursor, wherein the target text is part or all of the first text.

26. A content processing method, applied to an electronic device, wherein the method comprises:
displaying an interface of a first application, wherein the interface comprises a first text;
displaying a first panel in response to a first operation performed on the first text, wherein the first panel comprises the first text and a cursor, and the first text is in a select all state; and
selecting a target text in response to an operation performed on the cursor, wherein the target text is part or all of the first text.

27. A content processing method, applied to an electronic device, wherein the method comprises:
displaying an interface of a first application, wherein the interface comprises a first text;
displaying a first panel in response to a first operation performed on the first text, wherein the first panel comprises the first text and a cursor, and part of the first text is selected; and
selecting a target text in response to an operation performed on the cursor, wherein the target text is part or all of the first text.

28. An electronic device, comprising one or more processors and one or more memories, wherein the one or more memories are coupled to the one or more processors, the one or more memories are configured to store computer program code, the computer program code comprises a computer instruction, and when the one or more processors execute the computer instruction, the method according to any one of claims 1 to 27 is performed.

29. A computer-readable storage medium, comprising an instruction, wherein the instruction, when run on an electronic device, causes the method according to any one of claims 1 to 27 to be performed.
